(19) **Europäisches Patentamt / European Patent Office / Office européen des brevets**

(11) **EP 4 489 495 A1**

(12) **EUROPEAN PATENT APPLICATION**
published in accordance with Art. 153(4) EPC

(43) Date of publication:
**08.01.2025 Bulletin 2025/02**

(21) Application number: **22938813.7**

(22) Date of filing: **24.04.2022**

(51) International Patent Classification (IPC):
**H04W 72/04** (2023.01)

(52) Cooperative Patent Classification (CPC):
**H04W 72/04**

(86) International application number:
**PCT/CN2022/088807**

(87) International publication number:
**WO 2023/205954 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHAO, Zhenshan**
  **Dongguan, Guangdong 523860 (CN)**
• **DING, Yi**
  **Dongguan, Guangdong 523860 (CN)**

(74) Representative: **RGTH Patentanwälte PartGmbB**
**Neuer Wall 10**
**20354 Hamburg (DE)**

(54) **SIDELINK COMMUNICATION METHOD, TERMINAL DEVICE, AND NETWORK DEVICE**

(57)    Provided are a sidelink communication method, a terminal device, and a network device. The method comprises: a terminal device acquiring first information, wherein the first information is used for determining comb teeth from a resource pool, which comb teeth correspond to sub-channels. When sidelink communication is performed on the basis of an unlicensed spectrum, a terminal device may determine, on the basis of first information, comb teeth which correspond to sub-channels, that is, a correspondence between the sub-channels and the comb teeth is established, which is beneficial for improving the degree of matching between the sidelink communication performed on the basis of the sub-channels and a division mode of resources in the unlicensed spectrum. In this way, the problem of sidelink communication performed on the basis of sub-channels not matching a division mode in an unlicensed spectrum due to sub-channels in traditional sidelink communication only having a mapping relationship with RBs is avoided.

FIG. 7

**Description**

**TECHNICAL FIELD**

This application relates to the field of communications technologies, and more specifically, to a sidelink communication method, a terminal device, and a network device.

**BACKGROUND**

Currently, a terminal device may determine, based on a sub-channel (sub-channel) and a mapping between a sub-channel and a resource block (resource block, RB) in a resource pool, an RB occupied by sidelink communication. Based on current discussion about a communication protocol, an unlicensed spectrum may be introduced into a sidelink communication scenario. However, the foregoing manner based on a mapping between a sub-channel and an RB is not compatible to a manner of dividing frequency domain resources on the unlicensed spectrum.

**SUMMARY**

This application provides a sidelink communication method, a terminal device, and a network device. The following describes the aspects involved in this application.

According to a first aspect, a sidelink communication method is provided, and includes: obtaining, by a terminal device, first information, where the first information is used to determine one or more interlaces that are in a resource pool and correspond to a sub-channel.

According to a second aspect, a sidelink communication method is provided, and includes: generating, by a network device, first information, where the first information is used to determine one or more interlaces that are in a resource pool and correspond to a sub-channel.

According to a third aspect, a terminal device is provided, and includes: an obtaining unit, configured to obtain first information, where the first information is used to determine one or more interlaces that are in a resource pool and correspond to a sub-channel.

According to a fourth aspect, a network device is provided, and includes: a processing unit, configured to generate first information, where the first information is used to determine one or more interlaces that are in a resource pool and correspond to a sub-channel.

According to a fifth aspect, a terminal is provided, and includes a processor, a memory, and a communications interface. The memory is configured to store one or more computer programs, and the processor is configured to invoke the computer program in the memory, to cause the terminal device to execute some or all of the steps in the method according to the first aspect.

According to a sixth aspect, a network device is provided, and includes a processor, a memory, and a communications interface. The memory is configured to store one or more computer programs, and the processor is configured to invoke the computer program in the memory, to cause the network device to execute some or all of the steps in the method according to the second aspect.

According to a seventh aspect, an embodiment of this application provides a communications system, where the system includes the foregoing terminal and/or the foregoing network device. In another possible design, the system may further include another device that interacts with the terminal or the network device in the solutions provided in embodiments of this application.

According to an eighth aspect, an embodiment of this application provides a computer-readable storage medium, where the computer-readable storage medium stores a computer program, and the computer program causes a terminal to execute some or all of the steps in the method according to the first aspect.

According to a ninth aspect, an embodiment of this application provides a computer-readable storage medium, where the computer-readable storage medium stores a computer program, and the computer program causes a network device to execute some or all of the steps in the method according to the second aspect.

According to a tenth aspect, an embodiment of this application provides a computer program product, where the computer program product includes a non-transitory computer-readable storage medium that stores a computer program, and the computer program is operable to cause a terminal to execute some or all of the steps in the method according to the first aspect. In some implementations, the computer program product may be a software installation package.

According to an eleventh aspect, an embodiment of this application provides a computer program product, where the computer program product includes a non-transitory computer-readable storage medium that stores a computer program, and the computer program is operable to cause a network device to execute some or all of the steps in the method according to the second aspect. In some implementations, the computer program product may be a software installation package.

According to a twelfth aspect, an embodiment of this application provides a chip, where the chip includes a memory and a processor, and the processor may invoke a computer program from the memory and run the computer program, to implement some or all of the steps described in a method according to the first aspect or the second aspect.

When sidelink communication is performed based on an unlicensed spectrum, a terminal device may determine, based on first information, an interlace corresponding to a sub-channel, that is, establish a correspondence between a sub-channel and an interlace, which helps improve a degree of matching between sidelink communication performed based on a sub-channel and a manner of dividing resources on the unlicensed spectrum. This avoids a problem that sidelink communication based on a sub-channel does not match a division manner of an unlicensed spectrum due to that a sub-channel has a mapping with only an RB in conventional sidelink communication.

## BRIEF DESCRIPTION OF DRAWINGS

FIG. 1 shows a wireless communications system 100 to which embodiments of this application are applied.
FIG. 2 shows a frame structure of a system frame that does not carry a PSFCH in NR-V2X.
FIG. 3 shows a frame structure of a system frame that carries a PSFCH in NR-V2X.
FIG. 4 is a schematic diagram of a slot structure of a sidelink.
FIG. 5 is an example of a resource pool configured on an unlicensed spectrum to which embodiments of this application are applicable.
FIG. 6-A is a schematic diagram of a mapping between a CRB and a PRB.
FIG. 6-B is a schematic diagram of a mapping between a CRB and an interlace in an RB set in an NR-U system.
FIG. 7 is a flowchart of a sidelink communication method according to an embodiment of this application.
FIG. 8 is a schematic diagram of a correspondence between a sub-channel and an interlace according to an embodiment of this application.
FIG. 9 is a schematic diagram of a correspondence between a sub-channel and an interlace according to another embodiment of this application.
FIG. 10 is a schematic diagram of a correspondence between a sub-channel and an interlace according to still another embodiment of this application.
FIG. 11 is a schematic diagram of a resource correspondence according to an embodiment of this application.
FIG. 12 is a schematic diagram of a mapping between a PRB and a CRB according to an embodiment of this application.
FIG. 13 is a schematic diagram of a resource correspondence according to another embodiment of this application.
FIG. 14 is a schematic diagram of a resource correspondence according to still another embodiment of this application.
FIG. 15 is a schematic diagram of a resource correspondence according to yet another embodiment of this application.
FIG. 16 is a schematic diagram of a terminal device according to an embodiment of this application.
FIG. 17 is a schematic diagram of a network device according to an embodiment of this application.
FIG. 18 is a schematic structural diagram of a communications apparatus according to an embodiment of this application.

## DESCRIPTION OF EMBODIMENTS

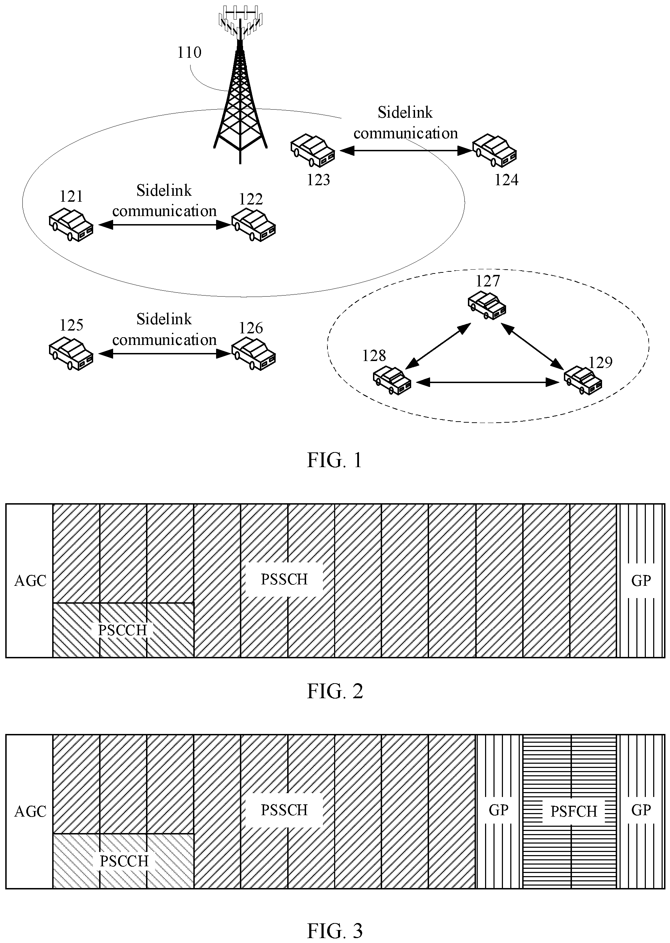

The following describes the technical solutions in this application with reference to the accompanying drawings. For ease of understanding, the following first describes terms and communication processes involved in this application with reference to FIG. 1 to FIG. 7.

FIG. 1 shows a wireless communications system 100 to which embodiments of this application are applicable. The wireless communications system 100 may include a network device 110 and terminals 121 to 129. The network device 110 may provide communication coverage for a specific geographic area, and may communicate with a terminal located in the coverage area.

In some implementations, terminals may communicate with each other by using a sidelink (sidelink, SL). Sidelink communication may also be referred to as proximity services (proximity services, ProSe) communication, unilateral communication, side link communication, device-to-device (device to device, D2D) communication, or direct link communication.

In other words, sidelink data is transmitted between terminals over a sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a physical sidelink feedback channel (physical sidelink feedback channel, PSFCH), a sidelink synchronization signal block (Sidelink synchronization signal block, S-SSB), or the like. The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

With reference to FIG. 1, the following describes several common sidelink communication scenarios. Sidelink communication may be classified into three scenarios depending on whether terminals on a sidelink are located in the coverage range of the network device. In a scenario 1, the terminals perform sidelink communication within the coverage range of the network device. In a scenario 2, some of the terminals perform sidelink communication within the coverage range of the network device. In a scenario 3, the terminals perform sidelink communication outside the coverage range of the network device.

As shown in FIG. 1, in the scenario 1, terminals 121 and 122 may communicate with each other by using a sidelink, and the terminals 121 and 122 are both within the coverage range of the network device 110. In other words, the terminals 121 and 122 are both within a coverage range of a same network device 110. In this scenario, the network device 110 may transmit configuration signalling to the terminals 121 and 122, and accordingly, the terminals 121 and 122 communicate with each other by using the sidelink based on the configuration signalling.

As shown in FIG. 1, in the scenario 2, terminals 123 and 124 may communicate with each other by using a sidelink, the terminal 123 is within the coverage range of the network device 110, and the terminal 124 is outside the coverage range of the network device 110. In this scenario, the terminal 123 receives configuration information from the network device 110, and performs communication by using the sidelink based on a configuration of configuration signalling. However, since the terminal 124 is outside the coverage range of the network device 110, the terminal 124 cannot receive the configuration information from the network device 110. In this case, the terminal 124 may obtain a configuration of sidelink communication based on pre-configured (pre-configuration) configuration information and/or configuration information transmitted by the terminal 123 within the coverage range, so that the terminal 124 communicates with the terminal 123 by using the sidelink based on the obtained configuration.

In some cases, the terminal 123 may transmit the configuration information to the terminal 124 through a sidelink broadcast channel (physical sidelink broadcast channel, PSBCH), to configure the terminal 124 to communicate by using the sidelink.

As shown in FIG. 1, in the scenario 3, terminals 125 to 129 are all outside the coverage range of the network device 110 and cannot communicate with the network device 110. In this case, all the terminals may perform sidelink communication based on pre-configured information.

In some cases, the terminals 127 to 129 outside the coverage range of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; being responsible for joining and leaving of a cluster member; resource coordination, allocation of sidelink transmission resources for the cluster members, and receiving of sidelink feedback information from the cluster members; resource coordination with another communication cluster, or another function.

It should be noted that FIG. 1 exemplarily shows one network device and a plurality of terminal devices. Optionally, the wireless communications system 100 may include a plurality of network devices, and another quantity of terminal devices may be included in a coverage range of each network device. This is not limited in embodiments of this application.

Optionally, the wireless communications system 100 may further include other network entities such as a network controller and a mobility management entity. This is not limited in embodiments of this application.

It should be understood that the technical solutions in embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a sixth-generation mobile communications system or a satellite communications system.

The terminal in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides sidelink data between UEs in V2X, D2D, or the like. For example, a cellular phone and a car communicate with each other by using sidelink data. A cellular phone and a smart home device communicate with each other, without relaying a communication signal by using a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or replace with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move depending on a location of the mobile base station. In other examples, a helicopter or an unmanned aerial vehicle may be configured to function as a device in communication with another base station.

In some deployments, the network device in embodiments of this application may refer to a CU or a DU, or the network device includes a CU and a DU. A gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of a communications device in this application may also be implemented by software functions running on hardware, or by virtualization functions instantiated on a platform (for example, a cloud platform).

## Sidelink resource allocation manners

Currently, in some communications systems (for example, NR), two modes for configuring sidelink resources are defined, that is, a mode 1 and a mode 2.

In the mode 1, a network device schedules a sidelink resource for a terminal device.

Currently, the mode 1 may include two manners: dynamic resource allocation (dynamic resource allocation) and a sidelink configured grant (sidelink configured grant, SL CG). In the manner of dynamic resource allocation, the network device may allocate a sidelink transmission resource to the terminal by transmitting downlink control information (downlink control information, DCI). In the manner of a sidelink configured grant, after a sidelink resource is configured for the terminal, if the terminal has to-be-transmitted data, the terminal may transmit the data by using the configured sidelink resource, without re-applying for sidelink resource from the network device. Therefore, a latency of a sidelink may be reduced by the resource configuration manner of a configured grant.

The configured grant further includes two types. In a type 1 (Type1) of the configured grant, a sidelink resource configuration is only based on radio resource control (radio resource control, RRC) signalling. In a type 2 (Type2) of the configured grant, a sidelink resource configuration in a communications system may be configured by using both RRC signalling and layer 1 (layer 1, L1) signalling, where the L1 signalling is used to indicate activation and deactivation of an RRC configuration.

In some implementations, the network device may schedule, for the terminal, a sidelink resource for a single time of transmission. In some other implementations, the network device may configure a semi-persistent sidelink resource for the terminal.

For example, referring to FIG. 1, the terminal devices 121 to 123 are within the coverage range of the network device 110, and the network device 110 may allocate sidelink resources to the terminal devices 121 to 123.

In the mode 2, a terminal independently selects a sidelink resource from a resource pool.

In this mode, a process executed by the terminal includes a resource probing process and/or a resource selection process. In the resource probing process, the terminal may identify occupancy of a sidelink resource by demodulating sidelink control information (sidelink control information, SCI). Alternatively, the terminal may identify occupancy of a sidelink resource by measuring a received power of a sidelink.

For example, referring to FIG. 1, the terminal devices 124 to 129 are outside the coverage range of the network device 110, and the terminal devices 124 to 129 may independently select a sidelink resource in the manner described in the mode 2.

**Sidelink transmission manners**

With development of autonomous driving technologies, the autonomous driving technologies may be integrated with a communications system, or in other words, data exchange between vehicle-mounted devices may be implemented by using the communications system. Therefore, a higher requirement is imposed on the communications system. For example, the communications system is required to support higher throughput, a lower latency, higher reliability, a larger coverage range, more flexible resource allocation, and the like. In LTE-V2X, only a broadcast manner is supported for sidelink communication between terminals. With development of technologies, unicast and multicast transmission manners are introduced into NR-V2X.

For the unicast transmission manner, generally there is only one terminal that receives sidelink data. Referring to FIG. 1, a terminal 121 and a terminal 122 may communicate with each other in the unicast transmission manner. When the terminal 121 transmits sidelink data over a sidelink, the terminal 122 serves as a unique receiving device to receive the sidelink data.

For the multicast transmission manner, terminals that receive sidelink data may include all terminals in a communication cluster, or include all terminals within a specific transmission distance. For example, referring to FIG. 1, for a communication cluster including terminals 127 to 129, when the terminal 127 transmits sidelink data in a multicast manner, the other terminals 128 and 129 in the communication cluster are both receiving terminals that receive the sidelink data. For another example, referring to FIG. 1, in the multicast transmission manner based on a transmission distance, it is assumed that when the terminal 127 transmits sidelink data in the multicast manner, and terminals within a preset transmission distance range include the terminals 128 and 129. In this case, the terminals 128 and 129 within the preset transmission distance range are both receiving terminals that receive the sidelink data.

For the broadcast transmission manner, a terminal that receives sidelink data may be any one of terminals around a terminal serving as a transmitting end. For example, referring to FIG. 1, it is assumed that a terminal 125 serves as a transmitting end and transmits sidelink data in the broadcast manner. In this case, terminals 121 to 124 and terminals 126 to 129 around the terminal 125 may serve as receiving ends of the sidelink data.

**Structure of a system frame**

With reference to FIG. 2 to FIG. 3, the following describes a frame structure of a sidelink system frame to which embodiments of this application are applicable. FIG. 2 shows a frame structure of a system frame that does not carry a PSFCH in NR-V2X. FIG. 3 shows a frame structure of a system frame that carries a PSFCH in NR-V2X.

Referring to FIG. 2, in time domain, a sidelink symbol occupied by a PSCCH occupies two or three sidelink symbols starting from the second sidelink symbol (for example, an orthogonal frequency division multiplexing (orthogonal frequency division multiplexing, OFDM) symbol) of a system frame. In frequency domain, the PSCCH may occupy {10, 12 15, 20, 25} physical resource blocks (physical resource block, PRB). Generally, to reduce complexity of blind detection performed by a terminal device on the PSCCH, only one PSCCH symbol quantity and only one PRB quantity are allowed to be configured in one resource pool. In addition, because a sub-channel is a minimum granularity for PSSCH resource allocation specified in NR-V2X, a quantity of PRBs occupied by the PSCCH must be less than or equal to a quantity of PRBs included in one sub-channel in the resource pool, to avoid additional limitation on resource selection or allocation of the PSSCH.

Still referring to FIG. 2, in time domain, a PSSCH also starts from the second sidelink symbol of a system frame, and ends at the last but one sidelink symbol of the system frame. In frequency domain, the PSSCH occupies K1 sub-channels of the system frame, where each sub-channel includes K2 consecutive PRBs, and K1 and K2 are positive integers.

Generally, the last symbol of the system frame is a guard period (guard period, GP) symbol. In addition, the first sidelink symbol of the system frame is a repetition of the second sidelink symbol. Generally, when receiving the system frame, a terminal may use the first sidelink symbol as an automatic gain control (automatic gain control, AGC) symbol. Generally, data on the AGC symbol is not used for data demodulation.

Referring to FIG. 3, when a system frame carries a PSFCH channel, the last but one sidelink symbol and the last but two sidelink symbol in the system frame are used for PSFCH transmission. In addition, a sidelink symbol that is before a PSFCH sidelink symbol and carried in the system frame serves as a GP.

**Unlicensed spectrum**

An unlicensed spectrum is a spectrum that is defined by a country or a region and that may be used for communication of a radio device. The spectrum is generally considered as a shared spectrum, that is, communications devices in different communications systems may use the spectrum provided that a regulatory requirement set for the spectrum by the country or the region is met, and there is no need to apply for a dedicated spectrum grant from a government.

To enable communications systems that perform wireless communication by using an unlicensed spectrum to coexist on the spectrum, some countries or regions stipulate regulatory requirements that must be met when the unlicensed spectrum is used. For example, a communications device follows a rule of "listen before talk (listen before talk, LBT)", that is, before transmitting a signal on a channel of an unlicensed spectrum, the communications device needs to perform channel listening first, and the communications device can perform signal transmission only when a result of the channel listening is that the channel is idle. If the result of the channel listening performed by the communications device on the channel of the unlicensed spectrum is that the channel is busy, the communications device cannot perform signal transmission. To ensure fairness, in one time of transmission, duration in which the communications device performs signal transmission by using a channel of an unlicensed spectrum cannot exceed a maximum channel occupancy time (maximum channel occupancy time, MCOT).

**Interlace structure in an NR-U system**

Currently, NR-based access to unlicensed spectrum (NR-based access to unlicensed spectrum, NR-U) is studied in a communication protocol (for example, 3GPP Rel-16). Generally, communication performed on an unlicensed band needs to meet a corresponding regulatory requirement, for example, an occupied channel bandwidth (occupied channel bandwidth, OCB) requirement and a power spectral density (power spectral density, PSD) requirement.

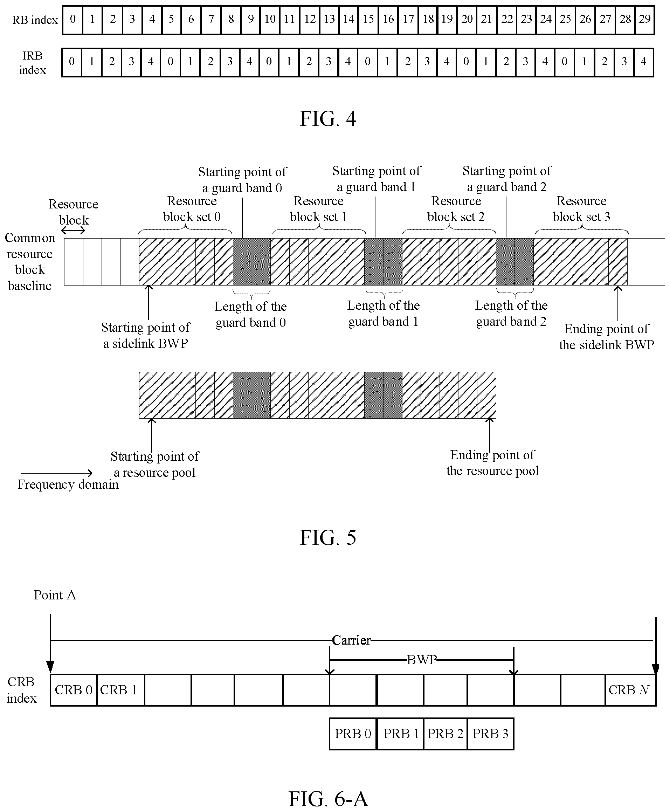

An OCB is used as an example. For an unlicensed spectrum within a 5 GHz band range, European regulations stipulate that when a terminal performs data transmission by using a channel, an occupied channel bandwidth is not less than 80% of a total channel bandwidth. That is, a frequency domain span between the lowest PRB in frequency domain and the highest PRB in frequency domain occupied by the transmission of the terminal device accounts for at least 80% of a total bandwidth. In this case, in a case in which the OCB regulation is met, if the terminal device occupies consecutive RBs in frequency domain, basically data of only one terminal device can be transmitted in one slot. Therefore, to enable more users to access a channel within a same time, a resource configuration manner based on an interlace (interlace) is defined in NR-U. One interlace resource includes N PRBs that are discrete in frequency domain, a total of M interlace resources are included in a band range, and PRBs included in the m$^{th}$ interlace are {m, M+m, 2M+m, 3M+m, ...}. Referring to FIG. 4, it is assumed that a system bandwidth includes 30 RBs, and includes five interlaces (that is, M = 5). Each interlace includes six PRBs (that is, N = 6). A frequency domain spacing between two adjacent PRBs in one interlace is the same, that is, five PRBs. It should be noted that PRBs included in an interlace may also be referred to as an interlaced resource block (interlaced resource block, IRB), and the interlace may also be referred to as an IRB.

In addition, in embodiments of this application, an RB and a PRB may be replaced with each other.

**Resource block set in an SL-U system**

FIG. 5 is an example of a resource pool configured on an unlicensed spectrum to which embodiments of this application are applicable. In a sidelink over unlicensed spectrum (Sidelink Over Unlicensed Spectrum, SL-U) system, a resource pool is configured on an unlicensed spectrum or a shared spectrum by using pre-configuration information or network configuration information, to be used for sidelink transmission. In some implementations, the resource pool includes M1 resource block sets (resource block set, RB set), where one resource block set includes M2 resource blocks (resource block, RB), and M1 and M2 are positive integers. In some implementations, one resource block set corresponds to one channel (channel) on an unlicensed spectrum (or a shared spectrum), or one resource block set corresponds to a minimum frequency domain granularity for performing LBT, or one resource block set corresponds to an LBT sub-band.

For example, a bandwidth corresponding to a channel on an unlicensed spectrum is 20 MHz, that is, a bandwidth corresponding to one resource block set is also 20 MHz. Alternatively, a bandwidth of a channel on an unlicensed spectrum is 20 MHz, which corresponds to M3 RBs. The M3 RBs are all RBs included in one channel, or all RBs that may be used for data transmission on one channel. For example, if M3 = 100 (corresponding to a subcarrier spacing of 15 kHz), one RB set also corresponds to 100 RBs, that is, M2 = 100.

For another example, on unlicensed spectrum, whether the unlicensed spectrum can be used depends on a result of LBT. If a minimum frequency domain granularity for performing LBT is 20 MHz, one resource block set corresponds to a quantity of RBs included in 20 MHz. Alternatively, one RB set includes M2 = 100 RBs (corresponding to a subcarrier spacing of 15 kHz), and a minimum frequency domain granularity for performing LBT is one RB set, that is, 100 RBs.

It should be noted that in embodiments of this application, the resource block set may also be referred to as a channel or an LBT sub-band, which is not limited in embodiments of this application.

In some implementations, a frequency domain start position of the resource pool is the same as a frequency domain start position of a first resource block set in the M1 resource block sets, where the first resource block set is a resource block set with the lowest frequency domain position in the M1 resource block sets.

In some implementations, a frequency domain end position of the resource pool is the same as a frequency domain end position of a second resource block set in the M1 resource block sets, where the second resource block set is a resource block set with the highest frequency domain position in the M1 resource block sets.

For example, the resource pool includes M1 = 3 resource block sets, and indices of the corresponding resource block sets are respectively a resource block set 0, a resource block set 1, and a resource block set 2, where a frequency domain position of the resource block set 0 is the lowest, and a frequency domain position of the resource block set 2 is the highest. Therefore, a frequency domain start position of the resource pool is the same as a frequency domain start position of the resource block set 0, or a frequency domain start position of the resource pool is determined based on a frequency domain start position of the resource block set 0. A frequency domain end position of the resource pool is the same as a frequency domain end position of the resource block set 2, or a frequency domain end position of the resource pool is determined based on a frequency domain end position of the resource block set 2.

In some implementations, a guard band is included between two adjacent resource block sets in the M1 resource block sets included in the resource pool.

In some implementations, a frequency domain start position and a frequency domain size of the guard band may be determined based on pre-configuration information or network configuration information. A terminal obtains the pre-configuration information or network configuration information, where the pre-configuration information or the network configuration information is used to configure a guard band. In some implementations, the guard band is used to separate RB sets.

For example, refer to FIG. 5 for understanding. Three guard bands are configured in a sidelink BWP, and respectively correspond to a guard band 0, a guard band 1, and a guard band 2. The three guard bands separate four resource block sets. A frequency domain start position and a frequency domain end position of each resource block set may be determined based on a frequency domain start position of each guard band (that is, a starting point of the guard band shown in the figure) and a frequency domain size of the guard band (that is, a length of the guard band shown in the figure). A sidelink bandwidth part (bandwidth part, BWP) includes the four resource block sets, and one sidelink resource pool is configured in the sidelink BWP. The sidelink resource pool includes three resource block sets, that is, a resource block set 0 to a resource block set 2. Therefore, a frequency domain start position of the resource pool (that is, a starting point of a resource pool shown in the figure) corresponds to a frequency domain start position of the resource block set 0, and a frequency domain end position of the resource pool (that is, an ending point of the resource pool shown in the figure) corresponds to a frequency domain end position of the resource block set 2.

In some implementations, one resource block set includes a plurality of interlaces. For example, each resource block set in FIG. 5 may include a plurality of interlaces.

In some implementations, one PSSCH may be transmitted in one or more resource block sets. In some other implementations, one PSSCH may be transmitted in one or more resource block sets, and the PSSCH occupies one or more interlaces in the one or more resource block sets.

**Resource mapping manner in an NR-U system**

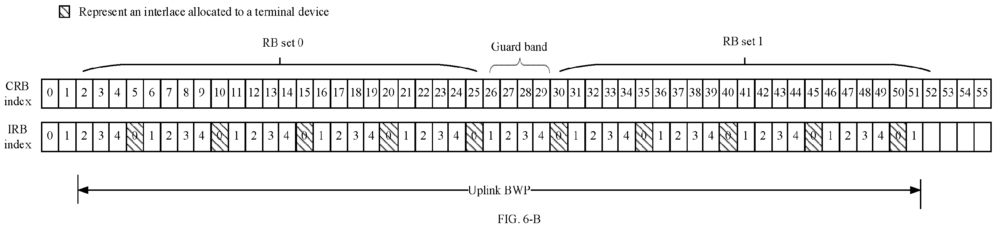

For ease of understanding, for a resource mapping manner in an NR-U system, a mapping between a common resource block (common resource block, CRB) and a PRB is first described with reference to FIG. 6-A, and a mapping between a CRB and an interlace in an RB set in the NR-U system is then described with reference to FIG. 6-B.

Currently, a basic concept of CRB is introduced into a protocol, so that terminal devices with different carrier bandwidths and terminal devices applying carrier aggregation may use uniform RB indices. Therefore, a CRB is equivalent to an absolute frequency domain scale that may cover one or more carrier band ranges. In some implementations, the CRB may include all RBs included in one system bandwidth. In some other implementations, the CRB is numbered from 0 in frequency domain with a subcarrier spacing set to $\mu$, or in other words, a starting CRB index is CRB 0. Referring to FIG. 6-A, a CRB is numbered from a reference point in a carrier or a system bandwidth, and the reference point is referred to as a "point A". For each type of subcarrier spacing, a subcarrier 0 of a CRB 0 is aligned with the point A. In addition, still referring to FIG. 6-A, when a BWP is allocated to a terminal device, PRBs in the BWP are indexed from a PRB 0. PRBs 0 to 3 included in the BWP in the figure may correspond to any four CRBs in a carrier, that is, a frequency domain start position of the PRB 0 in the BWP may not be aligned with a CRB 0.

FIG. 6-B shows a mapping between a CRB and an interlace in an RB set in an NR-U system.

Referring to FIG. 6-B, it is assumed that a quantity of interlaces included in a system bandwidth is 5. An uplink BWP corresponds to two RB sets. Indices of CRBs included in an RB set 0 are 2 to 25, and indices of CRBs included in an RB set 1 are 30 to 51. A guard band is configured between the two RB sets, and occupies four CRBs. In this case, an interlace index corresponding to an interlace is mapped by using a first-indexed CRB (a CRB 0) of a carrier as a frequency domain start position, and a mapping between an interlace index corresponding to an interlace and an index of a CRB is shown in FIG. 6-B.

Correspondingly, when allocating an uplink transmission resource to a terminal device, a network device needs to use a two-level resource indication, that is, indicating an allocated RB set and information about an interlace in the RB set. For example, when the network device may indicate, to the terminal device, that the RB set 0 and the RB set 1 and interlaces corresponding to interlace indices 0 in the two RB sets are allocated.

Currently, in an NR-U system, a quantity of interlaces included in one carrier is only related to a subcarrier spacing, and a correspondence between a quantity of interlaces included in a carrier and a size of a subcarrier spacing is shown in Table 1. When a size of a subcarrier spacing is 15 kHz, a corresponding quantity of interlaces included in a carrier is 10. When a size of a subcarrier spacing is 30 kHz, a corresponding quantity of interlaces included in a carrier is 5.

Table 1

| $\mu$ | Subcarrier spacing $\Delta f = 2^{\mu} \cdot 15$ [kHz] | Quantity $M$ of interlaces |
|---|---|---|
| 0 | 15 | 10 |
| 1 | 30 | 5 |

Currently, in a sidelink communications system, a terminal device may determine, based on a sub-channel and a mapping between a sub-channel and an RB in a resource pool, an RB occupied by sidelink communication. Based on current discussion about a communication protocol, an unlicensed spectrum may be introduced into a sidelink communication scenario. As described above, to meet a related regulation (for example, the OCB) for an unlicensed spectrum, frequency domain resources on the unlicensed spectrum are divided based on an interlace. Therefore, a conventional manner based on a mapping between a sub-channel and an RB is not adaptive to the unlicensed spectrum, or in other words, the conventional manner based on the mapping between a sub-channel and an RB does not match the manner of dividing frequency domain resources on the unlicensed spectrum.

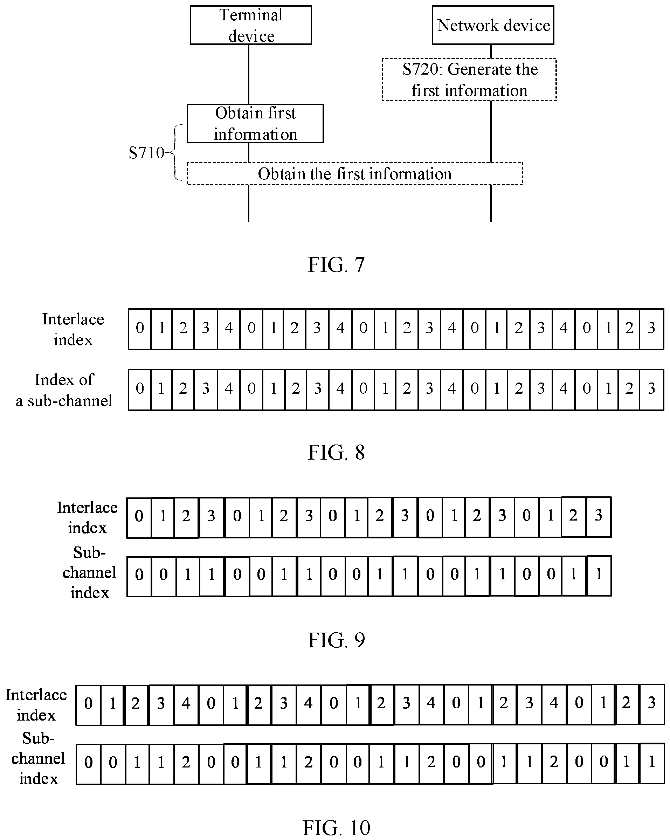

Therefore, to avoid the foregoing problem, this application provides a sidelink communication method. With reference to FIG. 7, the following describes a flowchart of a sidelink communication method according to an embodiment of this application. The method shown in FIG. 7 includes step S710 and step S720.

In step S710, a terminal device obtains first information.

The first information is used to determine an interlace that is in a resource pool and corresponds to a sub-channel, or in other words, the first information is used to indicate a correspondence between a sub-channel and an interlace in a resource pool, or in other words, the first information is used to indicate a correspondence between a sub-channel and an interlace in a sidelink BWP, or in other words, the first information is used to indicate a correspondence between a sub-channel and an interlace in a carrier. In some implementations, the foregoing correspondence may include a quantity of interlaces that are in a resource pool and included in a sub-channel. In other words, the first information may indicate, by using the quantity of the interlaces that are in the resource pool and included in the sub-channel, the interlaces that are in the resource pool and correspond to the sub-channel. With reference to FIG. 8 to FIG. 10, a correspondence between a sub-channel and an interlace will be described later. For brevity, details are not described herein.

In some implementations, if the first information is used to determine an interlace corresponding to a sub-channel, the first information may be information used for configuring a sub-channel for the terminal device, for example, may be DCI, RRC signalling, or SCI, or the first information is an information field included in DCI, RRC signalling, or SCI. For example, DCI or SCI includes an information field used to indicate a frequency domain resource, and the information field corresponds to the first information. The information field is used to indicate information about a sub-channel of a PSSCH channel. Interlace information of the PSSCH channel may be determined based on a correspondence between the sub-channel and an interlace. Therefore, an interlace in a corresponding resource pool may be determined based on the first information.

In some other implementations, if the first information is used to indicate a quantity of interlaces included in a sub-channel, the first information may be a parameter that indicates a sub-channel size (sub-channel size). Certainly, the first information may also be other information, which is not limited in embodiments of this application.

In some implementations, the first information may be information in resource pool configuration information or information in sidelink BWP configuration information.

The terminal device in step S710 may be a transmitting end of the first information, or may be a receiving end of the first information. If the terminal device is the receiving end of the first information, the first information may be transmitted by a network device, or may be transmitted by another terminal device, or may be obtained by the terminal device from pre-configuration information. That is, step S710 may include: transmitting, by another terminal device, the first information to the terminal device, or transmitting, by a network device, the first information to the terminal device. If the terminal device is the transmitting end of the first information, the first information obtained by the terminal device may be generated by the terminal device, or may be obtained by the terminal device from pre-configuration information. After obtaining the first information (that is, step S710), the terminal device may transmit the first information to another terminal device.

As described above, the first information may be configured by a network device for the terminal device. Correspondingly, before step S710, the foregoing method may further include step S720, that is, the network device generates the first information. Certainly, the terminal device may also obtain the first information in another manner, which is not limited in embodiments of this application. In some implementations, the first information may be pre-configured, for example, may be built into the terminal device before the terminal device is delivered from the factory.

In embodiments of this application, when sidelink communication is performed based on an unlicensed spectrum, a terminal device may determine, based on first information, an interlace corresponding to a sub-channel, that is, establish a correspondence between a sub-channel and an interlace, which helps improve a degree of matching between sidelink communication performed based on a sub-channel and a manner of dividing resources on an unlicensed spectrum. This avoids a problem that sidelink communication based on a sub-channel does not match a division manner of an unlicensed spectrum due to that a sub-channel has a mapping with only an RB in conventional sidelink communication.

For ease of understanding, the following describes a correspondence between a sub-channel and an interlace in embodiments of this application with reference to FIG. 8 to FIG. 10.

In a correspondence 1 between a sub-channel and an interlace, one sub-channel may include one interlace. That is, an index of one sub-channel may correspond to an interlace index of one interlace, or in other words, indices of sub-channels may have a one-to-one correspondence with interlace indices of interlaces. When indices of sub-channels have a one-to-one correspondence with interlace indices, to simplify a correspondence between a sub-channel and an interlace, an index of a sub-channel may be set to be the same as a corresponding interlace index. Certainly, an index of a sub-channel may also be different from a corresponding interlace index.

With reference to FIG. 8, the following describes a correspondence between a sub-channel and an interlace in embodiments of this application by using an example in which an index of a sub-channel is the same as a corresponding interlace index.

Referring to FIG. 8, it is assumed that indices of interlaces included in a resource pool are an interlace index 0, an interlace index 1, an interlace index 2, an interlace index 3, and an interlace index 4. Since an index of a sub-channel is the same as a corresponding interlace index, indices of sub-channels include an index 0, an index 1, an index 2, an index 3, and an index 4. The index 0 of a sub-channel corresponds to the interlace index 0 in the resource pool, the index 1 of a sub-channel corresponds to the interlace index 1 in the resource pool, the index 2 of a sub-channel corresponds to the interlace index 2 in the resource pool, the index 3 of a sub-channel corresponds to the interlace index 3 in the resource pool, and the index 4 of a sub-channel corresponds to the interlace index 4 in the resource pool.

In a correspondence 2 between a sub-channel and an interlace, one channel may include a plurality of interlaces. That is, an index of one sub-channel may correspond to interlace indices of a plurality of interlaces, or in other words, indices of sub-channels may have a one-to-many correspondence with interlace indices of interlaces. Generally, to simplify a correspondence between an index of a sub-channel and an interlace index, a plurality of interlace indices corresponding to an index of a sub-channel may be set to be consecutive. Certainly, in some embodiments of this application, a plurality of interlace indices corresponding to an index of one sub-channel may be dis-consecutive.

With reference to FIG. 9, the following describes a correspondence between an index of a sub-channel and an interlace index according to an embodiment of this application by using an example in which an index of one sub-channel corresponds to two consecutive interlace indices.

Referring to FIG. 9, it is assumed that indices of interlaces included in a resource pool are an interlace index 0, an interlace index 1, an interlace index 2, and an interlace index 3. Since an index of a sub-channel may correspond to two consecutive interlace indices, indices of a sub-channel include an index 0 and an index 1. The index 0 of the sub-channel corresponds to the interlace index 0 and the interlace index 1 in the resource pool, and the index 1 of the sub-channel corresponds to the interlace index 2 and the interlace index 3 in the resource pool.

It should be noted that in some cases (for example, the case shown in FIG. 9), a total quantity of interlaces in a resource pool is an integer multiple of a maximum quantity of interlaces included in a sub-channel (the following case 1). In this case, a quantity of interlaces included in each sub-channel in the resource pool may be the same, that is, the maximum quantity of interlaces included in a sub-channel. In addition, in this case, the maximum quantity of interlaces included in a sub-channel may be the same as the quantity of the interlaces included in the sub-channel.

In some other cases, a total quantity of interlaces in a resource pool is not an integer multiple of a maximum quantity of interlaces included in a sub-channel (the following case 2). In this case, different channels may correspond to different quantities of interlaces in the resource pool. In this case, interlaces included in a sub-channel may be determined based on the quantity of interlaces included in the resource pool and a quantity of interlaces included in the sub-channel. Certainly, in this embodiment of this application, a quantity of interlaces included in a sub-channel may also be determined in another manner.

For example, a total quantity of interlaces in a resource pool is 5, and a maximum quantity of interlaces included in each sub-channel is 2. In this case, an index of each of two sub-channels in the resource pool may correspond to two interlace indices, and an index of the remaining one sub-channel may correspond to one interlace index.

Generally, when different sub-channels include different quantities of interlaces in the resource pool, to evenly divide interlace resources in the resource pool, a difference between quantities of interlaces included in any two sub-channels in the resource pool may be set to be less than or equal to 1. Certainly, if evenly dividing resources is not an issue to be considered, a quantity of interlaces included in a sub-channel is not limited in embodiments of this application.

With reference to FIG. 10, the following describes a correspondence between an index of a sub-channel and an interlace index according to an embodiment of this application by using an example in which a maximum quantity of interlaces included in one sub-channel is 2.

Referring to FIG. 10, it is assumed that indices of interlaces included in a resource pool are an interlace index 0, an interlace index 1, an interlace index 2, an interlace index 3, and an interlace index 4, and indices of sub-channels include indices 0 to 2. Since a maximum quantity of interlaces included in a sub-channel is 2, the index 0 of a sub-channel may correspond to the interlace index 0 and the interlace index 1, the index 1 of a sub-channel may correspond to the interlace index 2 and the interlace index 3, and the index 2 of a sub-channel may correspond to the interlace index 4.

Currently, frequency domain resources on an unlicensed spectrum are divided based on an RB set. Correspondingly, an LBT mechanism is also executed based on an RB set. Therefore, when sidelink communication is performed based on an unlicensed spectrum, a manner of dividing resources based on an RB set may also be introduced. As described above, after the division manner based on an RB set is introduced into a current NR-U system, regardless of a quantity of RB sets included in an uplink BWP, a quantity of supported interlaces is only related to a size of a subcarrier spacing, and is not related to the quantity of the RB sets included in the uplink BWP, as shown in FIG. 6-B. Therefore, when allocating a frequency domain resource, both an RB set and an interlace resource need to be indicated, that is, a two-level resource configuration manner is used. However, a one-level resource configuration manner is currently used in a sidelink communication scenario, so that the two-level resource indication manner is not applicable to the sidelink communication scenario. In addition, a large quantity of transmission resources may be occupied by the two-level resource indication manner.

To avoid the foregoing problem, an embodiment of this application provides a correspondence between an RB set and an interlace, so that a terminal device may determine, based on an interlace only, an RB set in which the interlace is located and a CRB corresponding to the interlace in the RB set. This avoids configuration of a frequency domain resource in the conventional two-level resource configuration manner, to improve a degree of matching between a resource configuration manner based on an unlicensed spectrum and a sidelink communication scenario, and reduce transmission resources occupied by the configuration of the frequency domain resource.

In addition, to reuse a manner of configuring a frequency domain resource based on a sub-channel in an existing sidelink communication scenario, a frequency domain resource occupied by sidelink communication may be indicated based on both a correspondence between an RB set and an interlace, and a correspondence between a sub-channel and an interlace (for example, any correspondence described above). In this way, when sidelink communication is performed based on an unlicensed spectrum, the conventional resource configuration manner based on a sub-channel may continue to be used to configure a frequency domain resource for a terminal device. Correspondingly, the terminal device may determine, based on a configured sub-channel and the foregoing two correspondences, a CRB used for sidelink communication in a resource pool. In some implementations, frequency domain resource indication information may be included in DCI or SCI. The frequency domain resource indication information is used to indicate a sub-channel corresponding to a PSSCH. An interlace resource corresponding to a frequency domain resource of the PSSCH may be determined based on a correspondence between a sub-channel and an interlace. Further, with reference to a correspondence between an RB set and an interlace, an RB set resource corresponding to the frequency domain resource of the PSSCH and an interlace resource in the RB set may be determined. Further, a physical resource corresponding to the frequency domain resource of the PSSCH may be determined based on a correspondence between the interlace resource and an RB or a CRB.

The following describes a correspondence between an RB set and an interlace in a resource pool. It should be noted that the correspondence between an RB set and an interlace described in the following may be used in combination with any correspondence between a sub-channel and an interlace described above. This is not limited in embodiments of this application. Certainly, the correspondence between an RB set and an interlace described in the following may also be used separately.

For an RB set in a resource pool, one RB set may include one or more interlaces. That is, an index of an RB set may correspond to one or more interlace indices, and interlaces corresponding to the one or more interlace indices belongs to the RB set.

In an implementation, for a plurality of RB sets in the resource pool, interlace indices corresponding to interlaces included in different RB sets in the plurality of RB sets are different. In this case, an RB set corresponding to an interlace index may be determined based on a correspondence between an interlace index corresponding to an interlace and an RB set.

Generally, to simplify a correspondence between an index of an RB set and an interlace index, interlace indices corresponding to a plurality of interlaces in the resource pool may be set to be consecutively indexed across two adjacent RB sets. In other words, the plurality of RB sets includes a second RB set and a third RB set, an index of the second RB set is consecutive to an index of the third RB set, and interlace indices corresponding to interlaces included in the second RB are consecutive to interlace indices corresponding to interlaces included in the third RB set. In other words, if an index of the second RB set is consecutive to an index of the third RB set, a maximum interlace index among interlace indices corresponding to interlaces included in the second RB set is consecutive to a minimum interlace index among interlace indices corresponding to interlaces included in the third RB set. In other words, indices corresponding to interlace resources included in the resource pool are sequentially numbered across the plurality of RB sets. In this case, an RB set corresponding to an interlace and an interlace resource in the RB set may be determined based on an index of the interlace.

That the index of the second RB set is consecutive to the index of the third RB set may be implemented in many manners. In some implementations, that the index of the second RB set is consecutive to the index of the third RB set may include: the index of the second RB set and the index of the third RB set are consecutive and are incremented progressively. For example, the index of the second RB set is 0, and the index of the third RB set is 1. In some other implementations, that the index of the second RB set is consecutive to the index of the third RB set may include: the index of the second RB set and the index of the third RB set are consecutive and are decremented progressively. For example, the index of the second RB set is 1, and the index of the third RB set is 0.

That interlace indices corresponding to interlaces included in the second RB are consecutive to interlace indices corresponding to interlaces included in the third RB set may be implemented in many manners. In some implementations, interlace indices corresponding to interlaces included in the second RB and interlace indices corresponding to interlaces included in the third RB set are consecutive and are incremented progressively. For example, interlace indices corresponding to interlaces included in the second RB set are an interlace index 0 and an interlace index 1, and interlace indices corresponding to interlaces included in the third RB set are an interlace index 2 and an interlace index 3. In some other implementations, interlace indices corresponding to interlaces included in the second RB and interlace indices corresponding to interlaces included in the third RB set are consecutive and are decremented progressively. For example, interlace indices corresponding to interlaces included in the second RB set are an interlace index 2 and an interlace index 3, and interlace indices corresponding to interlaces included in the third RB set are an interlace index 0 and an interlace index 1.

It should be noted that the foregoing manner in which indices of RB sets are consecutive may be randomly combined with the manner in which interlace indices are consecutive. For example, if the index of the second RB set and the index of the third RB set are incremented progressively, the interlace indices corresponding to the interlaces included in the second RB set and the interlace indices corresponding to the interlaces included in the third RB set are incremented progressively.

Generally, to simplify a correspondence between an RB set and an interlace, a quantity of interlaces included in each RB set in the plurality of RB sets may be the same. Certainly, in some embodiments of this application, quantities of interlaces included in at least two RB sets in the plurality of RB sets may be different, which is not limited in embodiments of this application. It should be noted that in the following description of the solutions in embodiments of this application, that a quantity of interlaces included in each RB set in the plurality of RB sets is the same is used as an example.

The foregoing describes that indices of RB sets have correspondences with interlace indices. Therefore, in some implementations, an interlace index corresponding to an interlace in a resource pool is determined based on an index of an RB set to which the interlace belongs, or in other words, an interlace index corresponding to an interlace included in an RB set (also referred to as a "first RB set") is determined based on an index of the RB set.

In a case in which a quantity of interlaces included in each RB set in the plurality of RB sets is the same, an interlace index corresponding to an interlace included in an RB set may be determined based on the following manner. If the index of the first RB set in the resource pool is s, an interlace index m corresponding to an interlace included in the first RB set may be determined based on $m = m_1 + s \cdot M$, where $s \cdot M \leq m < (s + 1) \cdot M$, M represents a quantity of interlaces included in one RB set, $m_1$ is an integer greater than or equal to 0, and $0 \leq m_1 < M$.

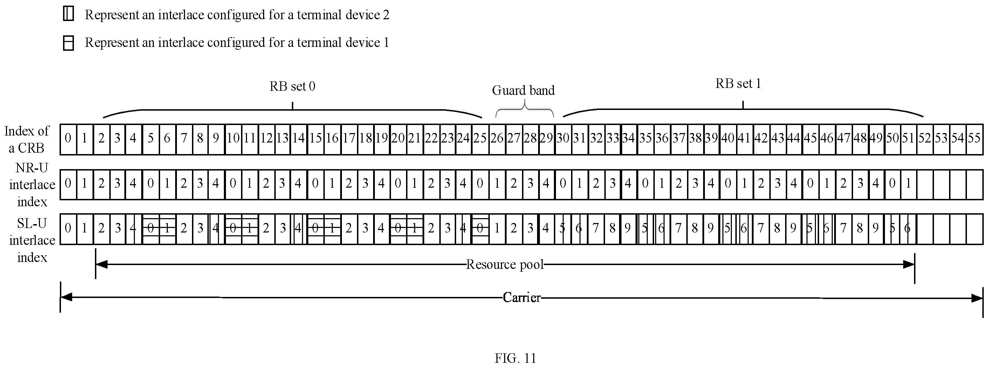

For example, referring to FIG. 11, an index of an RB set 0 in a resource pool is s = 0, and a quantity of interlaces included in one RB set is M = 5. In this case, when $m_1 = 0$, m = 0. When $m_1 = 1$, m = 1. When $m_1 = 2$, m = 2. When $m_1 = 3$, m = 3. When $m_1 = 4$, m = 4. That is, interlace indices corresponding to interlaces included in the RB set 0 are an interlace index 0, an interlace index 1, an interlace index 2, an interlace index 3, and an interlace index 4.

An index of an RB set 1 in the resource pool is s = 1, and a quantity of interlaces included in one RB set is M = 5. In this case, when $m_1 = 0$, m = 5. When $m_1 = 1$, m = 6. When $m_1 = 2$, m = 7. When $m_1 = 3$, m = 8. When $m_1 = 4$, m = 9. That is, interlace indices corresponding to interlaces included in the RB set 1 are an interlace index 5, an interlace index 6, an interlace index 7, an interlace index 8, and an interlace index 9.

It should be noted that in embodiments of this application, an interlace index corresponding to an interlace included in each RB set may be determined in another manner. For example, the interlace index corresponding to the interlace included in each RB set may be agreed in advance by using a mapping table, which is not limited in embodiments of this application.

In another implementation, for a plurality of RB sets in the resource pool, interlace indices corresponding to interlaces included in different RB sets in the plurality of RB sets are the same.

Generally, to simplify a mapping manner of an interlace index, interlace indices corresponding to a plurality of interlaces in an RB set may be set to be consecutive. In other words, indices corresponding to interlace resources included in the RB set are sequentially numbered in the RB set.

That interlace indices corresponding to interlaces included in the RB set are consecutive can be implemented in many manners. In some implementations, the interlace indices corresponding to the interlaces included in the RB set are consecutive and incremented. For example, the RB set includes three interlaces, and interlace indices corresponding to the three interlaces are respectively an interlace index 0, an interlace index 1, and an interlace index 2. In some other implementations, the interlace indices corresponding to the interlaces included in the RB set are consecutive and decremented.

In the foregoing case, if an RB set in which an interlace is located cannot be identified based on only an interlace index corresponding to the interlace included in the RB set, not only the RB set corresponding to the interlace but also a corresponding interlace in the RB set need to be determined, or in other words, an interlace needs to be determined by using an index of the RB set and an index of the interlace in the RB set. For ease of differentiation, an interlace index of an interlace corresponding to a sub-channel is referred to as a second interlace index, and an index of an interlace included in each RB set is referred to as a first interlace index. That is, first interlace indices corresponding to interlaces included in a plurality of RB sets are the same. For example, a resource pool includes two RB sets, which respectively correspond to an RB set 0 and an RB set 1. First interlace indices corresponding to interlaces included in the RB set 0 include 0 to 4, and first interlace indices corresponding to interlaces included in the RB set 1 are also 0 to 4. In this case, an RB set in which an interlace is located and a first interlace index of the interlace in the RB set may be determined based on a second interlace index of the interlace corresponding to an index of a sub-channel. Alternatively, a second interlace index of an interlace corresponding to a first interlace index in the RB set is determined based on an index of an RB set and the first interlace index in the RB set.

In some implementations, it is assumed that each RB set includes M interlaces, a first interlace index in the RB set is $m_1$, a value range is $0 \leq m_1 < M$, $m_1$ is an integer greater than or equal to 0, and a second interlace index of an interlace corresponding to a sub-channel is m. Then, an RB set in which an interlace is located and a first interlace index of the interlace in the RB set may be determined by using a second interlace index of the interlace in the following manner: an index s of an RB set corresponding to the second interlace index m is s = floor(m/M), and the first interlace index m1 in the RB set corresponding to the index s of the RB set is $m_1$ = modem, M), where floor() represents a flooring operation, and mod() represents a modulo operation.

For example, each RB set includes 5 interlaces, that is, M = 5, and a value range of a first interlace index $m_1$ in the RB set is $0 \leq m_1 < 5$, that is, first interlace indices corresponding to interlaces included in each RB set are 0 to 4. Therefore, when the second interlace index is 5 (that is, m = 5), the index s of the RB set corresponding to the second interlace index m

is s = $\text{floor}\left(\frac{m}{M}\right) = 1$, that is, corresponds to the RB set 1. In addition, the first interlace index m1 corresponding to the second interlace index m in the RB set 1 is $m_1 = \text{mod}(m, M) = 0$, that is, corresponds to a first-indexed interlace in the RB set 1.

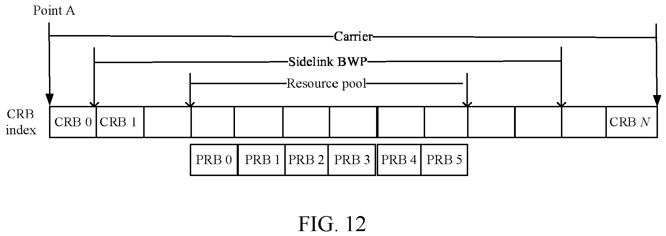

The foregoing describes a mapping between an RB set and an interlace index in a resource pool, and the following describes a mapping between an interlace and a physical resource, where the physical resource may be represented as a PRB or a CRB. For a mapping between a PRB and a CRB, refer to FIG. 12. A sidelink BWP is configured in a carrier, and a resource pool is configured in the sidelink BWP. An index of a PRB in the resource pool starts from a PRB 0 and CRBs are indexed from a point A. Therefore, each of PRBs 0 to 5 in the resource pool corresponds to a respective CRB index, that is, indices of PRBs in the resource pool have correspondences with indices of CRBs in the resource pool. In some implementations, only one sidelink BWP is configured in the carrier. In some implementations, one or more resource pools may be configured in the sidelink BWP, PRBs in each resource pool are indexed from a PRB 0, and PRB indices corresponding to the PRBs in each resource pool have correspondences with CRB indices.

By using a CRB as an example, the following describes a mapping between an interlace and a physical resource, that is, a mapping between an interlace and a CRB. It should be understood that because PRBs have correspondences with CRBs in a resource pool, the mapping between an interlace and a CRB described in the following is also applicable to a mapping between an interlace and a PRB. For example, a CRB with a CRB index of x corresponds to a PRB with a PRB index of y. If a CRB corresponding to an interlace includes the CRB x, it may be understood that a resource corresponding to the interlace includes the PRB y in the resource pool, where x is an integer greater than or equal to 0, and y is an integer greater than or equal to 0.

The following describes the mapping between an interlace and a CRB. It should be noted that in embodiments of this application, the mapping between an interlace and a CRB (for example, the mapping 1 and the mapping 2 in the following) may be used in combination with the correspondence between an RB set and an interlace in a resource pool described above. This is not limited in embodiments of this application. In embodiments of this application, the mapping between an interlace and a CRB (for example, the mapping 1 and the mapping 2 in the following) may be used in combination with any correspondence between a sub-channel and an interlace described above, which is not limited in embodiments of this application. In embodiments of this application, the mapping between an interlace and a CRB (for example, the mapping 1 and the mapping 2 in the following) may be used in combination with any correspondence between a sub-channel and an interlace described above, and the correspondence between an RB set and an interlace in a resource pool described above. This is not limited in embodiments of this application. Certainly, in an embodiment of this application, the mapping between an interlace and a CRB may also be used separately.

The mapping between an interlace and a CRB may be in a mapping manner 1 or a mapping manner 2.

In the mapping manner 1, an interlace may be mapped by using a first frequency domain position as a frequency domain start position, where the first frequency domain position is a first-indexed CRB included in a carrier corresponding to a resource pool; or the first frequency domain position is a first-indexed CRB included in a sidelink BWP corresponding to a resource pool.

In other words, a frequency domain start position of a first-indexed interlace in the resource pool is mapped to the first frequency domain position, and the other interlaces are mapped by using the first frequency domain position as the frequency domain start position. The first-indexed interlace may be an interlace with the smallest interlace index in a plurality of interlaces included in the resource pool. Certainly, the first-indexed interlace in the resource pool may also be an interlace with the largest interlace index in the plurality of interlaces included in the resource pool.

When the other interlaces are mapped, the other interlaces may be mapped in turn to CRBs corresponding to an RB set in ascending order of CRB indices in the RB set. Certainly, in this embodiment of this application, the other interlaces may also be mapped in another mapping manner.

In some implementations, a correspondence between an interlace corresponding to an RB set (also referred to as a "fourth RB set") in the resource pool and a CRB may be determined based on at least one of the following: a CRB index corresponding to a frequency domain start position of the sidelink BWP, a quantity of interlaces corresponding to an RB set in the resource pool, or an interlace index corresponding to the fourth RB set.

In some other implementations, a correspondence between an interlace corresponding to an RB set (also referred to as a "seventh RB set") in the resource pool and a CRB may be determined based on at least one of the following: a CRB index corresponding to a frequency domain start position of a carrier, a quantity of interlaces included in an RB set in the resource pool, or an interlace index corresponding to the seventh RB set.

In an implementation, a mapping between an index of a CRB $n_{CRB}$ and an interlace index m in the $(s + 1)^{th}$ RB set in the resource pool may be determined based on the following formula: $n_{CRB} = f_2(M, m, N^{start,\mu}, s)$, where $0 \le s < S$, $s \cdot M \le m < (s + 1) \cdot M$, $m = m_1 + s \cdot M$, and $0 \le m_1 < M$.

S represents a quantity of RB sets included in the resource pool; s represents an index of an RB set; M represents a quantity of interlaces included in one RB set; m represents an interlace index corresponding to an interlace included in the $(s + 1)^{th}$ RB set; $N^{start,\mu}$ represents a CRB index corresponding to a frequency domain start position of the carrier or the sidelink BWP corresponding to the resource pool; $\mu$ is determined based on a sidelink subcarrier spacing, as shown in Table 1 or Table 2; $f_2()$ represents a second function relationship; and $m_1$ is an integer greater than or equal to 0.

For example, the second function relationship may be represented as:

$$n_{CRB} = Mn_{IRB} + N^{start,\mu} + \left((m - N^{start,\mu}) \bmod M\right),$$

where

$n_{IRB} \in \{0,1,2,3, ...... \}$, and mod() represents a modulo operation.

For ease of understanding, the following continues to describe, with reference to FIG. 11, a mapping between an interlace index corresponding to an interlace in an RB set and an index of a CRB in the RB set according to an embodiment of this application by using the mapping manner 1 as an example.

Referring to FIG. 11, each RB set may include five interlaces, and a resource pool includes two RB sets. An RB set index of the RB set 0 is 0, and CRB indices corresponding to CRBs included in the RB set 0 are 2 to 25. An RB set index of the RB set 1 is 1, and CRB indices corresponding to CRBs included in the RB set 1 are 30 to 51. CRBs corresponding to CRB indices 26 to 29 belong to a guard band. Therefore, based on the correspondence between an index of an RB set and an interlace index described above, it may be learned that interlace indices corresponding to interlaces included in the RB set 0 are interlace indices 0 to 4. Interlace indices corresponding to interlaces included in the RB set 1 are interlace indices 5 to 9.

Because a first frequency domain position is a first-indexed CRB included in a carrier corresponding to the resource pool, that is, the first frequency domain position is a CRB corresponding to a CRB index 0, when the corresponding interlaces in the RB set 0 and the RB set 1 are mapped in the mapping manner 1, the interlaces are mapped by using the CRB corresponding to the CRB index 0 as a frequency domain start position. In the RB set 0, CRB indices of CRBs corresponding to an interlace with an interlace index 0 are 5, 10, 15, 20, and 25. CRB indices corresponding to an interlace with an interlace index 1 are 6, 11, 16, and 21. CRB indices corresponding to an interlace with an interlace index 2 are 2, 7, 12, 17, and 22. CRB indices corresponding to an interlace with an interlace index 3 are 3, 8, 13, 18, and 23. CRB indices corresponding to an interlace with an interlace index 4 are 4, 9, 14, 19, and 24. In the RB set 1, CRB indices of CRBs corresponding to an interlace with an interlace index 5 are 30, 35, 40, 45, and 50. CRB indices corresponding to an interlace with an interlace index 6 are 31, 36, 41, 46, and 51. CRB indices corresponding to an interlace with an interlace index 7 are 32, 37, 42, and 47. CRB indices corresponding to an interlace with an interlace index 8 are 33, 38, 43, and 48. CRB indices corresponding to an interlace with an interlace index 9 are 34, 39, 44, and 49.

Correspondingly, interlaces corresponding to the interlace index 0 and the interlace index 1 may be configured for a terminal device 1, and interlaces corresponding to the interlace indices 4 to 6 may be configured for a terminal device 2.

It should be noted that for ease of comparison, FIG. 11 further shows a manner of mapping interlaces to CRBs in an NR-U system. It may be learned that a start position in the manner of mapping interlaces to CRBs in this embodiment of this application is the same as a start position in a manner of mapping interlaces to CRBs in an NR-U system.

In another implementation, a mapping between an index of a CRB $n_{CRB}$ in the $(s + 1)^{th}$ RB set in the resource pool and an interlace index $m_1$ corresponding to an interlace in the RB set may be determined based on the following formula: $n_{CRB} = f_3(M, m_1, N^{start,\mu}, s)$, where $0 \le s < S$, and $0 \le m_1 < M$.

S represents a quantity of RB sets included in the resource pool; s represents an index of an RB set; M represents a quantity of interlaces included in one RB set; $N^{start,\mu}$ represents a CRB index corresponding to a frequency domain start position of a carrier or a sidelink BWP corresponding to the resource pool; $\mu$ is determined based on a sidelink subcarrier spacing, as shown in Table 1 or Table 2; $f_3()$ represents a third function relationship; and $m_1$ is an integer greater than or equal to 0.

For example, the third function relationship may be represented as:

$$n_{CRB} = Mn_{IRB} + N^{start,\mu} + \big((m_1 - N^{start,\mu}) \bmod M\big),$$

where

$n_{IRB} \in \{0,1,2,3, ... ...\}$, a value of $n_{IRB}$ makes $n_{CRB} \le RB_s^{end,u}$, and $RB_s^{end,u}$ represents a CRB index corresponding to a frequency domain end position of the $(s + 1)^{th}$ RB set. In the mapping manner 2, an interlace is mapped by using a first-indexed CRB included in a resource pool as a frequency domain start position.

In other words, a frequency domain start position of a first-indexed interlace is mapped to a first-indexed CRB in the resource pool, and the other interlaces in the resource pool are mapped by using the first-indexed CRB in the resource pool as the frequency domain start position. The first-indexed interlace may be an interlace with the smallest interlace index in a plurality of interlaces included in the resource pool. Certainly, the first-indexed interlace may also be an interlace with the largest interlace index in the plurality of interlaces included in the resource pool.

In addition, the first-indexed CRB in the resource pool is a CRB with the smallest CRB index in CRBs included in the resource pool. In other words, the first-indexed CRB in the resource pool is a CRB with the lowest frequency domain position in the resource pool.

When the other interlaces are mapped, the other interlaces may be mapped in turn to CRBs corresponding to an RB set in ascending order of CRB indices in the RB set. Certainly, in this embodiment of this application, the other interlaces may also be mapped in another mapping manner.

In some implementations, a correspondence between an interlace corresponding to an RB set (for example, a fifth RB set) in the resource pool and a CRB is determined based on at least one of the following: a CRB index corresponding to a frequency domain start position of an RB set, a quantity of interlaces corresponding to an RB set in the resource pool, or an interlace index corresponding to the RB set.

The CRB index corresponding to the frequency domain start position of the RB set may be directly indicated by an index of a first CRB in the RB set, and certainly may also be determined based on a CRB index corresponding to a frequency domain start position of a sidelink BWP in the resource pool and an index of the RB set.

In an implementation, a mapping between an index of a CRB $n_{CRB}$ and an interlace index m in the (s + 1)th RB set in the resource pool may be determined based on the following formula: $n_{CRB} = f_1\left(M, m, RB_s^{start,u}\right)$, where $0 \leq s < S$, $s \cdot M \leq m < (s + 1) \cdot M$, $m = m_1 + s \cdot M$, and $0 \leq m_1 < M$.

S represents a quantity of RB sets included in the resource pool; s represents an index of an RB set; M represents a quantity of interlaces included in one RB set; m represents an interlace index corresponding to an interlace included in the (s + 1 )th RB set; $RB_s^{start,u}$ represents a CRB index corresponding to a frequency domain start position of the (s + 1)th RB set; $\mu$ is determined based on a sidelink subcarrier spacing, as shown in Table 1 or Table 2; $f_1()$ represents a first function relationship; and $m_1$ is an integer greater than or equal to 0.

For example, the first function relationship may be represented as:

$$n_{CRB} = Mn_{IRB} + (m \bmod M) + RB_s^{start,\mu},$$

where

$n_{IRB} \in \{0,1,2,3, \ldots \ldots\}$, a value of $n_{IRB}$ makes $n_{CRB} \leq RB_s^{end,u}$, and $RB_s^{end,u}$ represents a CRB index corresponding to a frequency domain end position of the (s + 1)th RB set.

It should be noted that in the mapping manner 1 and the mapping manner 2, when s = 0, the (s + 1)th RB set corresponds to a first-indexed RB set. If an index of an RB set in the resource pool starts from 0, an index of the first-indexed RB set is 0.

In embodiments of this application, in addition to the mapping manner 1 and the mapping manner 2, a mapping between CRBs and interlaces in an RB set may be in another mapping manner. For example, the interlaces may be mapped by using a last-indexed CRB in the resource pool as a frequency domain start position. For another example, the interlaces may also be mapped by using a first-indexed CRB or a last-indexed CRB included in the carrier corresponding to the resource pool as the frequency domain start position. For another example, the interlaces may also be mapped by using a last-indexed CRB included in the sidelink BWP corresponding to the resource pool as the frequency domain start position. This is not specifically limited in embodiments of this application. Generally, the frequency domain start positions selected in the mapping manner 1 and the mapping manner 2 are relatively simple, thereby avoiding a process of calculating a frequency domain end position.

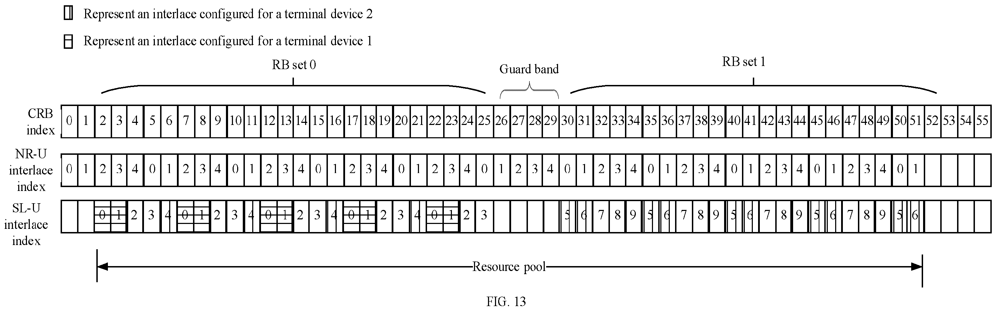

For ease of understanding, the following describes, with reference to FIG. 13, a mapping between an interlace index corresponding to an interlace in an RB set and an index of a CRB in the RB set according to another embodiment of this application by using the mapping manner 2 as an example.

Referring to FIG. 13, each RB set may include five interlaces, and a resource pool includes two RB sets. An RB set index of the RB set 0 is 0, and CRB indices corresponding to CRBs included in the RB set 0 are 2 to 25. An RB set index of the RB set 1 is 1, and CRB indices corresponding to CRBs included in the RB set 1 are 30 to 51. CRBs corresponding to CRB indices 26 to 29 belong to a guard band. Therefore, based on the correspondence between an index of an RB set and an interlace index described above, it may be learned that interlace indices corresponding to interlaces included in the RB set 0 are interlace indices 0 to 4. Interlace indices corresponding to interlaces included in the RB set 1 are interlace indices 5 to 9.

Because a CRB index corresponding to a first CRB in the resource pool is 2, when the corresponding interlaces in the RB set 0 and the RB set 1 are mapped in the mapping manner 2, the interlaces are mapped by using the CRB corresponding to the CRB index 2 as a frequency domain start position. In addition, by using the formula " $n_{CRB} = Mn_{IRB} + (m \bmod M) + RB_s^{start,\mu}$ " in the mapping manner 2, a correspondence between interlace indices corresponding to the interlaces in the RB set 0 and the RB set 1 and indices of CRBs may be calculated.

It may be learned based on FIG. 13 that $RB_s^{start,\mu} = 2$, and M = 5. In this case, a CRB index corresponding to an interlace with an interlace index 0 (that is, $m = 0$) is: when a value of $n_{IRB}$ is 0, $n_{CRB} = 2$; when a value of $n_{IRB}$ is 1, $n_{CRB} = 7$; when a value of $n_{IRB}$ is 2, a value of $n_{IRB}$ is 12; when a value of $n_{IRB}$ is 3, a value of $n_{IRB}$ is 17; when a value of $n_{IRB}$ is 4, a value of $n_{IRB}$ is 22. A CRB index corresponding to an interlace with an interlace index 1 (that is, $m = 1$) is: when a value of $n_{IRB}$ is 0, $n_{CRB}$ = 3; when a value of $n_{IRB}$ is 1, $n_{CRB}$ = 8; when a value of $n_{IRB}$ is 2, a value of $n_{IRB}$ is 13; when a value of $n_{IRB}$ is 3, a value of $n_{IRB}$ is 18; when a value of $n_{IRB}$ is 4, a value of $n_{IRB}$ is 23. The mapping shown in FIG. 13 may be obtained by repeating the above calculation.

That is, in the RB set 0, CRB indices of CRBs corresponding to an interlace with an interlace index 0 are 2, 7, 12, 17, and 22. CRB indices corresponding to an interlace with an interlace index 1 are 3, 8, 13, 18, and 23. CRB indices corresponding to an interlace with an interlace index 2 are 4, 9, 14, 19, and 24. CRB indices corresponding to an interlace with an interlace index 3 are 5, 10, 15, 20, and 25. CRB indices corresponding to an interlace with an interlace index 4 are 6, 11, 16, and 21. In the RB set 1, CRB indices of CRBs corresponding to an interlace with an interlace index 5 are 30, 35, 40, 45, and 50. CRB indices corresponding to an interlace with an interlace index 6 are 31, 36, 41, 46, and 51. CRB indices corresponding to an interlace with an interlace index 7 are 32, 37, 42, and 47. CRB indices corresponding to an interlace with an interlace index 8 are 33, 38, 43, and 48. CRB indices corresponding to an interlace with an interlace index 9 are 34, 39, 44, and 49.

Correspondingly, interlaces corresponding to the interlace index 0 and the interlace index 1 may be configured for a terminal device 1, and interlaces corresponding to the interlace indices 4 to 6 may be configured for a terminal device 2.

It should be noted that for ease of comparison, FIG. 13 further shows a manner of mapping interlaces to CRBs in an NR-U system. It may be learned that a start position in the manner of mapping interlaces to CRBs in this embodiment of this application is different from a start position in a manner of mapping interlaces to CRBs in an NR-U system.

Currently, in a conventional sidelink resource configuration manner, generally resource configuration is performed by using a resource pool. Therefore, in this embodiment of this application, a mapping between an index of a CRB in an RB set and an interlace index corresponding to an interlace in the RB set is established by using a first CRB included in the resource pool as a frequency domain start position, so that the mapping is more compatible with the conventional sidelink resource configuration manner.

As described above, to reuse a manner of configuring a frequency domain resource based on a sub-channel in an existing sidelink communication scenario, a correspondence between a sub-channel and an interlace may be established. The foregoing describes only a mapping between a sub-channel and an interlace, and the following describes a correspondence between a sub-channel and an interlace based on an RB set.

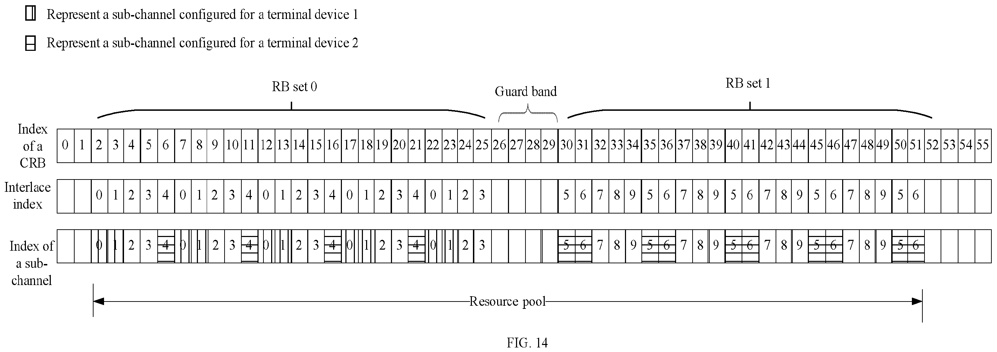

For ease of understanding, the following describes, with reference to FIG. 14, a correspondence between a sub-channel and an interlace according to an embodiment of this application by using the mapping manner 2 as an example. It should be noted that in FIG. 14, a mapping between an interlace index corresponding to an interlace and an index of a CRB is the same as that shown in FIG. 13. That is, the mapping is determined based on the mapping manner 2. For details, refer to related descriptions of FIG. 13. For brevity, the following mainly describes a correspondence between a sub-channel index and an interlace index corresponding to an interlace.

Referring to FIG. 14, to simplify calculation of a correspondence between a sub-channel and an interlace and a mapping between an interlace and a CRB by a terminal device, for a case in which sub-channels have a one-to-one correspondence with interlaces (that is, the foregoing correspondence 1), an index of a sub-channel may be set to be the same as an interlace index of a corresponding interlace. In an RB set 0, an index 0 of a sub-channel corresponds to an interlace index 0, an index 1 of a sub-channel corresponds to an interlace index 1, an index 2 of a sub-channel corresponds to an interlace index 2, an index 3 of a sub-channel corresponds to an interlace index 3, and an index 4 of a sub-channel corresponds to an interlace index 4. In an RB set 1, an index 5 of a sub-channel corresponds to an interlace index 5, an index 6 of a sub-channel corresponds to an interlace index 6, an index 7 of a sub-channel corresponds to an interlace index 7, an index 8 of a sub-channel corresponds to an interlace index 8, and an index 9 of a sub-channel corresponds to an interlace index 9.

Correspondingly, indices of sub-channels configured for a terminal device 1 are 0 to 1, and indices of sub-channels configured for a terminal device 2 are 4 to 6.

As described above, when a sub-channel includes a plurality of interlaces (that is, the correspondence 2 between a sub-channel and an interlace), a correspondence between a total quantity of interlaces in a resource pool and a quantity of interlaces included in a sub-channel may include two cases, that is, a case 1 and a case 2. In the case 1, the quantity of the interlaces included in the resource pool is an integer multiple of the quantity of the interlaces included in the sub-channel. In the case 2, the quantity of the interlaces included in the resource pool is not an integer multiple of the quantity of the interlaces included in the sub-channel. In this case, the quantity of the interlaces included in the resource pool is equal to a product of a quantity of RB sets included in the resource pool and a quantity of interlaces included in one RB set, or the quantity of the interlaces included in the resource pool is equal to a sum of quantities of interlaces included in all RB sets included in the resource pool.

After a manner of dividing resources based on an RB set is introduced, there may also be two cases, that is, a case 3 and a case 4. In the case 3, a quantity of interlaces included in each RB set in the resource pool is an integer multiple of the quantity of the interlaces included in the sub-channel. In the case 4, a quantity of interlaces included in each RB set in the resource pool is not an integer multiple of the quantity of the interlaces included in the sub-channel.

The case 3 is similar to the case 1 described above. In this case, a quantity of interlaces included in each sub-channel in the resource pool may be the same, that is, a maximum quantity of interlaces included in a sub-channel. In addition, in this case, the maximum quantity of interlaces included in a sub-channel may be the same as the quantity of the interlaces included in the sub-channel.

Generally, resources in the case 3 may be evenly divided. Therefore, when a resource pool is configured, a quantity of interlaces included in an RB set may be set to an integer multiple of a quantity of interlaces included in a sub-channel, or in other words, a terminal expects that a quantity of interlaces included in one RB set in the resource pool is an integer multiple of a quantity of interlaces included in a sub-channel (that is, a size of the sub-channel), or in other words, a terminal does not expect that a quantity of interlaces included in one RB set in the resource pool is not an integer multiple of a quantity of interlaces included in a sub-channel (that is, a size of the sub-channel).

Similarly, when resources are divided based on an RB set, resources in the case 1 may be evenly divided. Therefore, when a resource pool is configured, a quantity of interlaces included in all RB sets in the resource pool may be set to integer multiples of a quantity of interlaces included in a sub-channel, or in other words, a terminal expects that the quantity of interlaces included in all RB sets in the resource pool is integer multiples of a quantity of interlaces included in a sub-channel (that is, a size of the sub-channel), or in other words, a terminal does not expect that the quantity of interlaces included in all RB sets in the resource pool is not integer multiples of a quantity of interlaces included in a sub-channel (that is, a size of the sub-channel).

The case 4 is similar to the case 2 described above. In this case, a quantity of interlaces included in each sub-channel in one RB set may be different. In this case, an interlace included in a sub-channel may be determined based on a quantity of interlaces included in an RB set (also referred to as a "sixth RB set") and the quantity of the interlaces included in the sub-channel. Certainly, in this embodiment of this application, a quantity of interlaces included in a sub-channel may also be determined in another manner.

Generally, when quantities of interlaces included in sub-channels in an RB set are different, to evenly divide interlace resources in the RB set, a difference between quantities of interlaces included in any two sub-channels in the RB set may be set to be less than or equal to 1. Certainly, if evenly dividing resources is not an issue to be considered, a quantity of interlaces included in a sub-channel in an RB set is not limited in embodiments of this application.

The following describes a method for determining an interlace corresponding to a sub-channel in the case 4 and the case 2 based on a scenario in which resources are divided by using an RB set.

For the case 4, an interlace corresponding to a sub-channel in an RB set may be determined based on one or more of the following parameters: a quantity of interlaces included in the RB set, or a quantity of interlaces included in the sub-channel.

It is assumed that the quantity of the interlaces included in the RB set is represented as M, and the quantity of the interlaces included in the sub-channel is represented as N.

In some implementations, a quantity of corresponding sub-channels in the RB set is $K1 = \text{ceil}(M/N)$, and $R1 = \text{mod}(M,N)$. In this case, $(K1-R1)$ sub-channels may include $[\text{floor}(M/N)]$ interlace resources, and the remaining R1 sub-channels may include $[\text{floor}(M/N)-1]$ interlace resources, where ceil() represents a ceiling operation, floor() represents a flooring operation, and mod() represents a modulo operation.

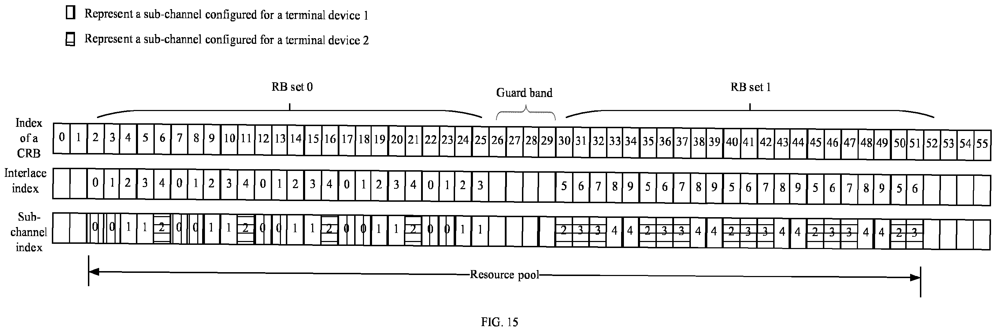

For example, referring to FIG. 15, M = 5 and N = 2. In this case, $K1 = \text{ceil}(M/N) = 3$, $R1 = \text{mod}(M,N) = 1$, and floor(M/N) = 2. That is, each of two sub-channels in the RB set (the RB set 0 or the RB set 1) may include two interlace resources, and the remaining one sub-channel may include one interlace resource.

In some other implementations, $K1 = \text{ceil}(M/N)$, each sub-channel in $(K1*N-M)$ sub-channels in the RB set includes (N-1) interlace resources, having a total of A interlace resources. In this case, $A = (K1*N-M)*(N-1)$. Each sub-channel in the remaining (M-A)/N sub-channels includes N interlace resources.

For example, M = 10, N = 3, $K1 = \text{ceil}(M/N) = 4$, $K1*N-M = 2$, $A = (K1*N-M)*(N-1) = 4$, and (M-A)/N = 2. That is, each sub-channel in two sub-channels includes two interlace resources, having a total of four interlace resources. Each sub-channel in the remaining two sub-channels includes three interlace resources.

It should be noted that the $(K1*N-M)$ sub-channels that each includes (N-1) interlace resources may be the first $(K1*N-M)$ sub-channels in the RB set, or the $(K1*N-M)$ sub-channels that each includes (N-1) interlace resources may be the last $(K1*N-M)$ sub-channels in the RB set. This is not limited in embodiments of this application.

In the foregoing implementations, in a case in which the quantity of the interlaces included in the RB set is not an integer multiple of the quantity of the interlaces included in the sub-channel, a difference between quantities of interlaces included in any two sub-channels in the RB set may be set to be less than or equal to 1, thereby improving evenness of resource division.

For the case 2, in a scenario of dividing resources based on an RB set, a total quantity of interlaces included in a resource pool may be understood as a total quantity of interlaces included in all RB sets in the resource pool. The case 2 may be expressed as that the quantity of the interlaces included in all the RB sets in the resource pool is not an integer multiple of the quantity of the interlaces included in the sub-channel.

In this case, an interlace corresponding to a sub-channel in an RB set may be determined based on one or more of the following parameters: a quantity of interlaces included in the RB set, a quantity of interlaces included in the sub-channel, or a quantity of the RB sets included in the resource pool.

It is assumed that the quantity of the interlaces included in the RB set is represented as M, the quantity of the interlaces included in the sub-channel is represented as N, and the quantity of the RB sets included in the resource pool is S.

In some implementations, a quantity of sub-channels corresponding to all the RB sets in the resource pool is $K2 = ceil(S \cdot M/N)$, and $R2 = mod(S \cdot M, N)$. In this case, $(K2-R2)$ sub-channels may include $[floor(S \cdot M/N)]$ interlace resources, and the remaining R2 sub-channels may include $[floor(S \cdot M/N)-1]$ interlace resources, where ceil() represents a ceiling operation, floor() represents a flooring operation, and mod() represents a modulo operation.

For example, $S = 1$, $M = 5$, and $N = 2$. In this case, $K2 = ceil(S \cdot M/N) = 3$, $R2 = mod(S \cdot M, N) = 1$, and $floor(S \cdot M/N) = 2$. That is, each of two sub-channels in all the RB sets in the resource pool may include two interlace resources, and the remaining one sub-channel may include one interlace resource.

In some other implementations, $K2 = ceil(S \cdot M/N)$, each sub-channel in $(K2*N-M)$ sub-channels in all the RB sets in the resource pool includes $(N-1)$ interlace resources, having a total of A interlace resources, and $A = (K2*N-M)*(N-1)$. Each sub-channel in the remaining $(K2*M-A)/N$ sub-channels includes N interlace resources, where ceil() represents a ceiling operation.

For example, $S = 1$, $M = 10$, $N = 3$, $K2 = ceil(S \cdot M/N) = 4$, $K2*N-M = 2$, $A = (K2*N-M)*(N-1) = 4$, and $(K2*M-A)/N = 2$. That is, each sub-channel in two sub-channels includes two interlace resources, having a total of four interlace resources. Each sub-channel in the remaining two sub-channels includes three interlace resources.

It should be noted that the $(K2*N-M)$ sub-channels that each includes $(N-1)$ interlace resources may be the first $(K2*N-M)$ sub-channels in the RB set, or the $(K2*N-M)$ sub-channels that each includes $(N-1)$ interlace resources may be the last $(K2*N-M)$ sub-channels in the RB set. This is not limited in embodiments of this application.

In the foregoing implementations, in a case in which the quantity of the interlaces included in the RB set is not an integer multiple of the quantity of the interlaces included in the sub-channel, a difference between quantities of interlaces included in any two sub-channels in the RB set may be set to be less than or equal to 1, thereby improving evenness of resource division.

For ease of understanding, the following describes, with reference to FIG. 15, a correspondence between a sub-channel and an interlace in an RB set according to an embodiment of this application by using the mapping manner 2 as an example. It should be noted that a mapping between an interlace index corresponding to an interlace in a resource pool and an index of a CRB is the same as that shown in FIG. 13. That is, the mapping is determined based on the mapping manner 2. For details, refer to related descriptions of FIG. 13. For brevity, the following mainly describes a correspondence between an index of a sub-channel and an interlace index corresponding to an interlace in a resource pool.

The example of FIG. 15 corresponds to the foregoing case 1, that is, a quantity of interlaces included in all RB sets in a resource pool is an integer multiple of a quantity of interlaces included in one sub-channel. Referring to FIG. 15, each RB set may include five interlaces, and a resource pool includes two RB sets. An RB set index of an RB set 0 is 0, and an RB set index of an RB set 1 is 1. Interlace indices corresponding to interlaces included in the RB set 0 are interlace indices 0 to 4. Interlace indices corresponding to interlaces included in the RB set 1 are interlace indices 5 to 9. If a maximum quantity of interlaces included in a sub-channel is 2, a quantity (10 interlaces) of interlaces included in all the RB sets in the resource pool is an integer multiple of a quantity of interlaces included in one sub-channel. Each sub-channel corresponds to two consecutive interlaces. Therefore, an index 0 of a sub-channel corresponds to the interlace index 0 and the interlace index 1. An index 1 of a sub-channel corresponds to the interlace index 2 and the interlace index 3. An index 2 of a sub-channel corresponds to the interlace index 4 and the interlace index 5. An index 3 of a sub-channel corresponds to the interlace index 6 and the interlace index 7. An index 4 of a sub-channel corresponds to the interlace index 8 and the interlace index 9.

Correspondingly, an index of a sub-channel configured for a terminal device 1 is 0, and indices of sub-channels configured for a terminal device 2 are 2 to 3.

Currently, in a conventional sidelink resource configuration manner, a PSSCH resource may be configured in the granularity of sub-channel. Therefore, the methods in embodiments of this application may be used to configure a PSSCH resource. In addition, the methods in embodiments of this application may be further used to configure a PSCCH resource, that is, a quantity of interlaces included in a frequency domain resource of a PSCCH is less than or equal to a quantity of interlaces included in a sub-channel. For example, if the sub-channel includes two interlaces, the frequency domain resource of the PSCCH may occupy one or two interlaces.

In some implementations, a quantity of interlaces included in a frequency domain resource of a PSCCH (that is, a frequency domain size of the PSCCH, which is also referred to as "second information") may be carried in configuration information of the resource pool.

In this embodiment of this application, a quantity of interlaces included in one RB set in the resource pool is determined based on a size of a sidelink subcarrier spacing, or in other words, a quantity of interlaces included in one RB set is related to a size of a sidelink subcarrier spacing.

Table 2 shows a possible implementation of a correspondence between a quantity of interlaces included in one RB set and a size of a sidelink subcarrier spacing. When the size of the sidelink subcarrier spacing is 15, the quantity M of the interlaces in the RB set is 10. When the size of the sidelink subcarrier spacing is 30, the quantity M of the interlaces in the RB set is 5.

Table 2

| $\mu$ | Sidelink subcarrier spacing $\Delta f = 2^{\mu} \cdot 15$ [kHz] | Quantity **M** of interlaces in one RB set |
|---|---|---|
| 0 | 15 | 10 |
| 1 | 30 | 5 |

In this embodiment of this application, the correspondence between a quantity of interlaces included in one RB set and a size of a sidelink subcarrier spacing may be pre-defined, pre-configured, or configured by a network device, which is not limited in embodiments of this application.

In addition, in some scenarios, an intra-cell guard band (intra-cell guard band) is configured. A mapping between a resource corresponding to a guard band and an interlace resource is not limited in embodiments of this application.

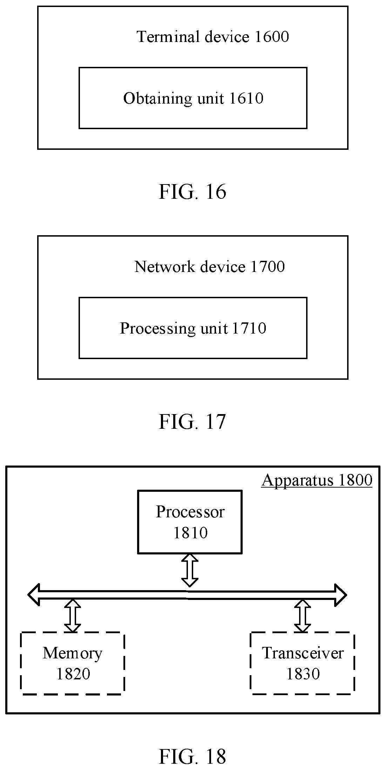

The foregoing describes method embodiments of this application in detail with reference to FIG. 1 to FIG. 15. The following describes apparatus embodiments of this application in detail with reference to FIG. 16 to FIG. 18. It should be understood that the descriptions of the method embodiments correspond to the descriptions of the apparatus embodiments, and therefore, for parts that are not described in detail, refer to the foregoing method embodiments.

FIG. 16 is a schematic diagram of a terminal device according to an embodiment of this application. The terminal device 1600 shown in FIG. 16 includes an obtaining unit 1610.

The obtaining unit 1610 is configured to obtain first information, where the first information is used to determine one or more interlaces that are in a resource pool and correspond to a sub-channel.

In a possible implementation, the first information indicates the one or more interlaces corresponding to the sub-channel, by indicating a quantity of the one or more interlaces comprised in the sub-channel.

In a possible implementation, indices of sub-channels in the resource pool have correspondences with indices of interlaces in the resource pool.

In a possible implementation, when the sub-channel includes one interlace, indices of sub-channels in the resource pool have a one-to-one correspondence with indices of interlaces in the resource pool.

In a possible implementation, when the sub-channel includes a plurality of interlaces, indices of the plurality of interlaces are consecutive.

In a possible implementation, interlace indices corresponding to the one or more interlaces are determined based on an index of an RB set to which the one or more interlaces belong.

In a possible implementation, the resource pool includes a first RB set, and an interlace index corresponding to an interlace included in the first RB set is determined based on an index of the first RB set.

In a possible implementation, an index of the first RB set in the resource pool is s, and an interlace index m corresponding to an interlace included in the first RB set is determined based on $m = m_1 + s \cdot M$, where $s \cdot M \leq m < (s+1) \cdot M$, M represents a quantity of interlaces included in one RB set, $m_1$ is an integer greater than or equal to 0, and $0 \leq m_1 < M$.

In a possible implementation, the resource pool includes a plurality of RB sets, and interlace indices corresponding to interlaces included in different RB sets in the plurality of RB sets are different.

In a possible implementation, the plurality of RB sets include a second RB set and a third RB set, and if an index of the second RB set is consecutive to an index of the third RB set, a maximum interlace index among interlace indices corresponding to interlaces included in the second RB set is consecutive to a minimum interlace index among interlace indices corresponding to interlaces included in the third RB set.

In a possible implementation, a first-indexed interlace in the resource pool is mapped by using a first frequency domain position as a frequency domain start position, where the first frequency domain position is a first-indexed CRB included in a carrier corresponding to the resource pool; or the first frequency domain position is a first-indexed CRB included in a sidelink BWP corresponding to the resource pool.

In a possible implementation, the resource pool includes a fourth RB set, and a correspondence between an interlace corresponding to the fourth RB set and a CRB is determined based on at least one of the following: a CRB index corresponding to a frequency domain start position of the sidelink BWP, a quantity of interlaces corresponding to an RB set in the resource pool, or an interlace index corresponding to the fourth RB set.

In a possible implementation, the interlaces are mapped by using a first-indexed CRB included in one resource pool as a frequency domain start position.

In a possible implementation, the resource pool includes a fifth RB set, and a correspondence between an interlace corresponding to the fifth RB set and a CRB is determined based on at least one of the following: a CRB index corresponding to a frequency domain start position of the fifth RB set, a quantity of interlaces corresponding to an RB set in the resource pool, or an interlace index corresponding to the fifth RB set.

In a possible implementation, quantities of interlaces corresponding to different RB sets in a plurality of RB sets included in the resource pool are the same.

In a possible implementation, a quantity of interlaces included in an RB set in the resource pool is determined based on a size of a sidelink subcarrier spacing.

In a possible implementation, a quantity of interlaces included in each RB set in the resource pool is an integer multiple of a quantity of the interlaces included in the sub-channel.

In a possible implementation, the resource pool includes a sixth RB set, and if a quantity of interlaces included in the sixth RB set is not an integer multiple of a quantity of the interlaces corresponding to the sub-channel, an interlace included in a sub-channel in the sixth RB set is determined based on the quantity of the interlaces included in the sixth RB set and the quantity of the interlaces included in the sub-channel.

In a possible implementation, a difference between quantities of interlaces included in any two sub-channels in the sixth RB set is less than or equal to 1.

In a possible implementation, a total quantity of interlaces in the resource pool is an integer multiple of a quantity of the interlaces included in the sub-channel.

In a possible implementation, a quantity of interlaces included in each sub-channel in the resource pool is the same.

In a possible implementation, a total quantity of interlaces in the resource pool is not an integer multiple of a quantity of the interlaces included in the sub-channel, and an interlace included in a sub-channel in the resource pool is determined based on the quantity of the interlaces included in the resource pool and the quantity of the interlaces included in the sub-channel.

In a possible implementation, a difference between quantities of interlaces included in any two sub-channels in the resource pool is less than or equal to 1.

In a possible implementation, resource pool configuration information of the resource pool includes the first information.

In a possible implementation, the obtaining unit is further configured to obtain second information, where the second information is used to indicate a quantity of interlaces included in a frequency domain resource of a PSCCH, and the quantity of the interlaces included in the frequency domain resource of the PSCCH is less than or equal to a quantity of the interlaces included in the sub-channel.

In a possible implementation, resource pool configuration information of the resource pool includes the second information.

FIG. 17 is a schematic diagram of a network device according to an embodiment of this application. The network device 1700 shown in FIG. 17 includes a processing unit 1710.

The processing unit 1710 is configured to generate first information, where the first information is used to determine one or more interlaces that are in a resource pool and correspond to a sub-channel.

In a possible implementation, the first information indicates the one or more interlaces corresponding to the sub-channel, by indicating a quantity of the one or more interlaces comprised in the sub-channel.

In a possible implementation, indices of sub-channels in the resource pool have correspondences with indices of interlaces in the resource pool.

In a possible implementation, when the sub-channel includes one interlace, indices of sub-channels in the resource pool have a one-to-one correspondence with indices of interlaces in the resource pool.

In a possible implementation, when the sub-channel includes a plurality of interlaces, indices of the plurality of interlaces are consecutive.

In a possible implementation, interlace indices corresponding to the one or more interlaces are determined based on an index of an RB set to which the one or more interlaces belong.

In a possible implementation, the resource pool includes a first RB set, and an interlace index corresponding to an interlace included in the first RB set is determined based on an index of the first RB set.

In a possible implementation, an index of the first RB set in the resource pool is s, and an interlace index m corresponding to an interlace included in the first RB set is determined based on $m = m_1 + s \cdot M$, where $s \cdot M \leq m < (s + 1) \cdot M$, M represents a quantity of interlaces included in one RB set, $m_1$ is an integer greater than or equal to 0, and $0 \leq m_1 < M$.

In a possible implementation, the resource pool includes a plurality of RB sets, and interlace indices corresponding to interlaces included in different RB sets in the plurality of RB sets are different.

In a possible implementation, the plurality of RB sets include a second RB set and a third RB set, and if an index of the second RB set is consecutive to an index of the third RB set, a maximum interlace index among interlace indices corresponding to interlaces included in the second RB set is consecutive to a minimum interlace index among interlace indices corresponding to interlaces included in the third RB set.

In a possible implementation, a first-indexed interlace in the resource pool is mapped by using a first frequency domain position as a frequency domain start position, where the first frequency domain position is a first-indexed CRB included in a carrier corresponding to the resource pool; or the first frequency domain position is a first-indexed CRB included in a sidelink BWP corresponding to the resource pool.

In a possible implementation, the resource pool includes a fourth RB set, and a correspondence between an interlace corresponding to the fourth RB set and a CRB is determined based on at least one of the following: a CRB index corresponding to a frequency domain start position of the sidelink BWP, a quantity of interlaces corresponding to an RB set in the resource pool, or an interlace index corresponding to the fourth RB set.

In a possible implementation, the interlaces are mapped by using a first-indexed CRB included in one resource pool as a frequency domain start position.

In a possible implementation, the resource pool includes a fifth RB set, and a correspondence between an interlace corresponding to the fifth RB set and a CRB is determined based on at least one of the following: a CRB index corresponding to a frequency domain start position of the fifth RB set, a quantity of interlaces corresponding to an RB set in the resource pool, or an interlace index corresponding to the fifth RB set.

In a possible implementation, quantities of interlaces corresponding to different RB sets in a plurality of RB sets included in the resource pool are the same.

In a possible implementation, a quantity of interlaces included in an RB set in the resource pool is determined based on a size of a sidelink subcarrier spacing.

In a possible implementation, a quantity of interlaces included in each RB set in the resource pool is an integer multiple of a quantity of the interlaces included in the sub-channel.

In a possible implementation, the resource pool includes a sixth RB set, and if a quantity of interlaces included in the sixth RB set is not an integer multiple of a quantity of the interlaces corresponding to the sub-channel, an interlace included in a sub-channel in the sixth RB set is determined based on the quantity of the interlaces included in the sixth RB set and the quantity of the interlaces included in the sub-channel.

In a possible implementation, a difference between quantities of interlaces included in any two sub-channels in the sixth RB set is less than or equal to 1.

In a possible implementation, a total quantity of interlaces in the resource pool is an integer multiple of a quantity of the interlaces included in the sub-channel.

In a possible implementation, a quantity of interlaces included in each sub-channel in the resource pool is the same.

In a possible implementation, a total quantity of interlaces in the resource pool is not an integer multiple of a quantity of the interlaces included in the sub-channel, and an interlace included in a sub-channel in the resource pool is determined based on the quantity of the interlaces included in the resource pool and the quantity of the interlaces included in the sub-channel.

In a possible implementation, a difference between quantities of interlaces included in any two sub-channels in the resource pool is less than or equal to 1.

In a possible implementation, resource pool configuration information of the resource pool includes the first information.

In a possible implementation, the generating unit is further configured to generate second information, where the second information is used to indicate a quantity of interlaces included in a frequency domain resource of a PSCCH, and the quantity of the interlaces included in the frequency domain resource of the PSCCH is less than or equal to a quantity of the interlaces included in the sub-channel.

In a possible implementation, resource pool configuration information of the resource pool includes the second information.

FIG. 18 is a schematic structural diagram of a communications apparatus according to an embodiment of this application. Dashed lines in FIG. 18 indicate that units or modules are optional. The apparatus 1800 may be configured to implement the methods described in the foregoing method embodiments. The apparatus 1800 may be a chip, a terminal device, or a network device.

The apparatus 1800 may include one or more processors 1810. The processor 1810 may allow the apparatus 1800 to implement the methods described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, where the program may be executed by the processor 1810, to cause the processor 1810 to execute the methods described in the foregoing method embodiments. The memory 1820 may be independent of the processor 1810 or may be integrated into the processor 1810.

The apparatus 1800 may further include a transceiver 1830. The processor 1810 may communicate with another device or chip by using the transceiver 1830. For example, the processor 1810 may transmit data to and receive data from another device or chip by using the transceiver 1830.

An embodiment of this application further provides a computer-readable storage medium for storing a program. The computer-readable storage medium may be applied to a terminal or a network device provided in embodiments of this application, and the program causes a computer to execute the methods to be executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods to be executed by the terminal or the network device in various embodiments of this application.

An embodiment of this application further provides a computer program. The computer program may be applied to a terminal or a network device provided in embodiments of this application, and the computer program causes a computer to execute the methods to be executed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, the "indication" mentioned may be a direct indication or an indirect indication, or indicate an association. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association between A and B.

In embodiments of this application, "B corresponding to A" means that B is associated with A, and B may be determined based on A. However, it should also be understood that determining B based on A does not mean determining B based only on A, but instead B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "pre-defining" or "pre-configuring" may be implemented by pre-storing corresponding code or a corresponding table in a device (for example, including a terminal device and a network device) or in other manners that may be used for indicating related information. A specific implementation thereof is not limited in this application. For example, pre-defining may indicate being defined in a protocol.

In embodiments of this application, the "protocol" may indicate a standard protocol in the communication field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes shall be determined based on functions and internal logic of the processes, and shall not constitute any limitation on the implementation processes of embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, comprising:
   obtaining, by a terminal device, first information, wherein the first information is used to determine one or more interlaces that are in a resource pool and correspond to a sub-channel.

2. The method according to claim 1, wherein the first information indicates the one or more interlaces corresponding to the sub-channel, by indicating a quantity of the one or more interlaces comprised in the sub-channel.

3. The method according to claim 1 or 2, wherein indices of sub-channels in the resource pool have correspondences with indices of interlaces in the resource pool.

4. The method according to any one of claims 1 to 3, wherein when the sub-channel comprises one interlace, indices of sub-channels in the resource pool have a one-to-one correspondence with indices of interlaces in the resource pool.

5. The method according to any one of claims 1 to 3, wherein when the sub-channel comprises a plurality of interlaces, indices of the plurality of interlaces are consecutive.

6. The method according to any one of claims 1 to 5, wherein interlace indices corresponding to the one or more interlaces are determined based on an index of an RB set to which the one or more interlaces belong.

7. The method according to any one of claims 1 to 6, wherein the resource pool comprises a first RB set, and an interlace index corresponding to an interlace comprised in the first RB set is determined based on an index of the first RB set.

8. The method according to claim 7, wherein an index of the first RB set in the resource pool is s, and an interlace index m corresponding to an interlace comprised in the first RB set is determined based on $m = m_1 + s \cdot M$, wherein $s \cdot M \leq m < (s + 1) \cdot M$, M represents a quantity of interlaces comprised in one RB set, $m_1$ is an integer greater than or equal to 0, and $0 \leq m_1 < M$.

9. The method according to any one of claims 1 to 8, wherein the resource pool comprises a plurality of RB sets, and interlace indices corresponding to interlaces comprised in different RB sets in the plurality of RB sets are different.

10. The method according to claim 9, wherein the plurality of RB sets comprise a second RB set and a third RB set, and if an index of the second RB set is consecutive to an index of the third RB set, a maximum interlace index among interlace indices corresponding to interlaces comprised in the second RB set is consecutive to a minimum interlace index among interlace indices corresponding to interlaces comprised in the third RB set.

11. The method according to any one of claims 1 to 10, wherein a first-indexed interlace in the resource pool is mapped by using a first frequency domain position as a frequency domain start position, wherein

the first frequency domain position is a first-indexed CRB comprised in a carrier corresponding to the resource pool; or
the first frequency domain position is a first-indexed CRB comprised in a sidelink BWP corresponding to the resource pool.

12. The method according to claim 11, wherein the resource pool comprises a fourth RB set, and a correspondence between an interlace corresponding to the fourth RB set and a CRB is determined based on at least one of following: a CRB index corresponding to a frequency domain start position of the sidelink BWP, a quantity of interlaces corresponding to an RB set in the resource pool, or an interlace index corresponding to the fourth RB set.

13. The method according to any one of claims 1 to 10, wherein the interlaces are mapped by using a first-indexed CRB comprised in the resource pool as a frequency domain start position.

14. The method according to claim 13, wherein the resource pool comprises a fifth RB set, and a correspondence between an interlace corresponding to the fifth RB set and a CRB is determined based on at least one of following: a CRB index corresponding to a frequency domain start position of the fifth RB set, a quantity of interlaces corresponding to an RB set in the resource pool, or an interlace index corresponding to the fifth RB set.

15. The method according to any one of claims 1 to 14, wherein quantities of interlaces corresponding to different RB sets in a plurality of RB sets comprised in the resource pool are the same.

16. The method according to any one of claims 1 to 15, wherein a quantity of interlaces comprised in an RB set in the resource pool is determined based on a size of a sidelink subcarrier spacing.

17. The method according to any one of claims 1 to 16, wherein a quantity of interlaces comprised in each RB set in the resource pool is an integer multiple of a quantity of the one or more interlaces comprised in the sub-channel.

18. The method according to any one of claims 1 to 16, wherein the resource pool comprises a sixth RB set, and if a quantity of interlaces comprised in the sixth RB set is not an integer multiple of a quantity of the one or more interlaces corresponding to the sub-channel, an interlace comprised in a sub-channel in the sixth RB set is determined based on the quantity of the interlaces comprised in the sixth RB set and the quantity of the one or more interlaces comprised in the sub-channel.

19. The method according to claim 18, wherein a difference between quantities of interlaces comprised in any two sub-channels in the sixth RB set is less than or equal to 1.

20. The method according to any one of claims 1 to 16, wherein a total quantity of interlaces in the resource pool is an integer multiple of a quantity of the one or more interlaces comprised in the sub-channel.

21. The method according to any one of claims 1 to 16, wherein a quantity of interlaces comprised in each sub-channel in the resource pool is the same.

22. The method according to any one of claims 1 to 16, wherein a total quantity of interlaces in the resource pool is not an integer multiple of a quantity of the one or more interlaces comprised in the sub-channel, and an interlace comprised in a sub-channel in the resource pool is determined based on the quantity of interlaces comprised in the resource pool and the quantity of the one or more interlaces comprised in the sub-channel.

23. The method according to claim 22, wherein a difference between quantities of interlaces comprised in any two sub-channels in the resource pool is less than or equal to 1.

24. The method according to any one of claims 1 to 23, wherein resource pool configuration information of the resource pool comprises the first information.

25. The method according to any one of claims 1 to 24, wherein the method further comprises:
obtaining, by the terminal device, second information, wherein the second information is used to indicate a quantity of interlaces comprised in a frequency domain resource of a PSCCH, and the quantity of the interlaces comprised in the frequency domain resource of the PSCCH is less than or equal to a quantity of the one or more interlaces comprised in the sub-channel.

26. The method according to claim 25, wherein resource pool configuration information of the resource pool comprises the second information.

27. A sidelink communication method, comprising:
generating, by a network device, first information, wherein the first information is used to determine one or more interlaces that are in a resource pool and correspond to a sub-channel.

28. The method according to claim 27, wherein the first information indicates the one or more interlaces corresponding to the sub-channel, by indicating a quantity of the one or more interlaces comprised in the sub-channel.

29. The method according to claim 27 or 28, wherein indices of sub-channels in the resource pool have correspondences with indices of interlaces in the resource pool.

30. The method according to any one of claims 27 to 29, wherein when the sub-channel comprises one interlace, indices of sub-channels in the resource pool have a one-to-one correspondence with indices of interlaces in the resource pool.

31. The method according to any one of claims 27 to 29, wherein when the sub-channel comprises a plurality of interlaces, indices of the plurality of interlaces are consecutive.

32. The method according to any one of claims 27 to 31, wherein interlace indices corresponding to the one or more interlaces are determined based on an index of an RB set to which the one or more interlaces belong.

33. The method according to any one of claims 27 to 32, wherein the resource pool comprises a first RB set, and an interlace index corresponding to an interlace comprised in the first RB set is determined based on an index of the first RB set.

34. The method according to claim 33, wherein an index of the first RB set in the resource pool is s, and an interlace index m corresponding to an interlace comprised in the first RB set is determined based on $m = m_1 + s \cdot M$, wherein $s \cdot M \leq m < (s + 1) \cdot M$, M represents a quantity of interlaces comprised in one RB set, $m_1$ is an integer greater than or equal to 0, and $0 \leq m_1 < M$.

35. The method according to any one of claims 27 to 34, wherein the resource pool comprises a plurality of RB sets, and interlace indices corresponding to interlaces comprised in different RB sets in the plurality of RB sets are different.

36. The method according to claim 35, wherein the plurality of RB sets comprise a second RB set and a third RB set, and if an index of the second RB set is consecutive to an index of the third RB set, a maximum interlace index among interlace indices corresponding to interlaces comprised in the second RB set is consecutive to a minimum interlace index among interlace indices corresponding to interlaces comprised in the third RB set.

37. The method according to any one of claims 27 to 36, wherein a first-indexed interlace in the resource pool is mapped by using a first frequency domain position as a frequency domain start position, wherein

the first frequency domain position is a first-indexed CRB comprised in a carrier corresponding to the resource pool; or
the first frequency domain position is a first-indexed CRB comprised in a sidelink BWP corresponding to the resource pool.

38. The method according to claim 37, wherein the resource pool comprises a fourth RB set, and a correspondence between an interlace corresponding to the fourth RB set and a CRB is determined based on at least one of following: a CRB index corresponding to a frequency domain start position of the sidelink BWP, a quantity of interlaces corresponding to an RB set in the resource pool, or an interlace index corresponding to the fourth RB set.

39. The method according to any one of claims 27 to 36, wherein the interlaces are mapped by using a first-indexed CRB comprised in the resource pool as a frequency domain start position.

40. The method according to claim 39, wherein the resource pool comprises a fifth RB set, and a correspondence between an interlace corresponding to the fifth RB set and a CRB is determined based on at least one of following: a CRB index corresponding to a frequency domain start position of the fifth RB set, a quantity of interlaces corresponding to an RB set in the resource pool, or an interlace index corresponding to the fifth RB set.

41. The method according to any one of claims 27 to 40, wherein quantities of interlaces corresponding to different RB sets in a plurality of RB sets comprised in the resource pool are the same.

42. The method according to any one of claims 27 to 41, wherein a quantity of interlaces comprised in an RB set in the resource pool is determined based on a size of a sidelink subcarrier spacing.

43. The method according to any one of claims 27 to 42, wherein a quantity of interlaces comprised in each RB set in the resource pool is an integer multiple of a quantity of the one or more interlaces comprised in the sub-channel.

44. The method according to any one of claims 27 to 42, wherein the resource pool comprises a sixth RB set, and if a quantity of interlaces comprised in the sixth RB set is not an integer multiple of a quantity of the one or more interlaces corresponding to the sub-channel, an interlace comprised in a sub-channel in the sixth RB set is determined based on the quantity of the interlaces comprised in the sixth RB set and the quantity of the one or more interlaces comprised in the sub-channel.

45. The method according to claim 44, wherein a difference between quantities of interlaces comprised in any two sub-channels in the sixth RB set is less than or equal to 1.

46. The method according to any one of claims 27 to 42, wherein a total quantity of interlaces in the resource pool is an integer multiple of a quantity of the one or more interlaces comprised in the sub-channel.

47. The method according to any one of claims 27 to 42, wherein a quantity of interlaces comprised in each sub-channel in the resource pool is the same.

48. The method according to any one of claims 27 to 42, wherein a total quantity of interlaces in the resource pool is not an integer multiple of a quantity of the one or more interlaces comprised in the sub-channel, and an interlace comprised in a sub-channel in the resource pool is determined based on the quantity of interlaces comprised in the resource pool and the quantity of the one or more interlaces comprised in the sub-channel.

49. The method according to claim 48, wherein a difference between quantities of interlaces comprised in any two sub-channels in the resource pool is less than or equal to 1.

50. The method according to any one of claims 27 to 49, wherein resource pool configuration information of the resource pool comprises the first information.

51. The method according to any one of claims 27 to 50, wherein the method further comprises:
generating, by the network device, second information, wherein the second information is used to indicate a quantity of interlaces comprised in a frequency domain resource of a PSCCH, and the quantity of the interlaces comprised in the frequency domain resource of the PSCCH is less than or equal to a quantity of the one or more interlaces comprised in the sub-channel.

52. The method according to claim 51, wherein resource pool configuration information of the resource pool comprises the second information.

53. A terminal device, comprising:
an obtaining unit, configured to obtain first information, wherein the first information is used to determine one or more interlaces that are in a resource pool and correspond to a sub-channel.

54. The terminal device according to claim 53, wherein the first information indicates the one or more interlaces corresponding to the sub-channel, by indicating a quantity of the one or more interlaces comprised in the sub-channel.

55. The terminal device according to claim 53 or 54, wherein indices of sub-channels in the resource pool have correspondences with indices of interlaces in the resource pool.

56. The terminal device according to any one of claims 53 to 55, wherein when the sub-channel comprises one interlace, indices of sub-channels in the resource pool have a one-to-one correspondence with indices of interlaces in the resource pool.

57. The terminal device according to any one of claims 53 to 55, wherein when the sub-channel comprises a plurality of interlaces, indices of the plurality of interlaces are consecutive.

58. The terminal device according to any one of claims 53 to 57, wherein interlace indices corresponding to the one or more interlaces are determined based on an index of an RB set to which the one or more interlaces belong.

59. The terminal device according to any one of claims 53 to 58, wherein the resource pool comprises a first RB set, and an interlace index corresponding to an interlace comprised in the first RB set is determined based on an index of the first RB set.

60. The terminal device according to claim 59, wherein an index of the first RB set in the resource pool is s, and an interlace index m corresponding to an interlace comprised in the first RB set is determined based on $m = m_1 + s \cdot M$, wherein $s \cdot M \leq m < (s + 1) \cdot M$, M represents a quantity of interlaces comprised in one RB set, $m_1$ is an integer greater than or equal to 0, and $0 \leq m_1 < M$.

61. The terminal device according to any one of claims 53 to 60, wherein the resource pool comprises a plurality of RB sets, and interlace indices corresponding to interlaces comprised in different RB sets in the plurality of RB sets are different.

62. The terminal device according to claim 61, wherein the plurality of RB sets comprise a second RB set and a third RB set, and if an index of the second RB set is consecutive to an index of the third RB set, a maximum interlace index among interlace indices corresponding to interlaces comprised in the second RB set is consecutive to a minimum interlace index among interlace indices corresponding to interlaces comprised in the third RB set.

63. The terminal device according to any one of claims 53 to 62, wherein a first-indexed interlace in the resource pool is mapped by using a first frequency domain position as a frequency domain start position, wherein

the first frequency domain position is a first-indexed CRB comprised in a carrier corresponding to the resource pool; or
the first frequency domain position is a first-indexed CRB comprised in a sidelink BWP corresponding to the resource pool.

64. The terminal device according to claim 63, wherein the resource pool comprises a fourth RB set, and a correspondence between an interlace corresponding to the fourth RB set and a CRB is determined based on at least one of following: a CRB index corresponding to a frequency domain start position of the sidelink BWP, a quantity of interlaces corresponding to an RB set in the resource pool, or an interlace index corresponding to the fourth RB set.

65. The terminal device according to any one of claims 53 to 62, wherein the interlaces are mapped by using a first-indexed CRB comprised in the resource pool as a frequency domain start position.

66. The terminal device according to claim 65, wherein the resource pool comprises a fifth RB set, and a correspondence between an interlace corresponding to the fifth RB set and a CRB is determined based on at least one of following: a CRB index corresponding to a frequency domain start position of the fifth RB set, a quantity of interlaces corresponding to an RB set in the resource pool, or an interlace index corresponding to the fifth RB set.

67. The terminal device according to any one of claims 53 to 66, wherein quantities of interlaces corresponding to different RB sets in a plurality of RB sets comprised in the resource pool are the same.

68. The terminal device according to any one of claims 53 to 67, wherein a quantity of interlaces comprised in an RB set in the resource pool is determined based on a size of a sidelink subcarrier spacing.

69. The terminal device according to any one of claims 53 to 68, wherein a quantity of interlaces comprised in each RB set in the resource pool is an integer multiple of a quantity of the one or more interlaces comprised in the sub-channel.

70. The terminal device according to any one of claims 53 to 68, wherein the resource pool comprises a sixth RB set, and if a quantity of interlaces comprised in the sixth RB set is not an integer multiple of a quantity of the one or more interlaces corresponding to the sub-channel, an interlace comprised in a sub-channel in the sixth RB set is determined based on the quantity of the interlaces comprised in the sixth RB set and the quantity of the one or more interlaces comprised in the sub-channel.

71. The terminal device according to claim 70, wherein a difference between quantities of interlaces comprised in any two sub-channels in the sixth RB set is less than or equal to 1.

72. The terminal device according to any one of claims 53 to 68, wherein a total quantity of interlaces in the resource pool is an integer multiple of a quantity of the one or more interlaces comprised in the sub-channel.

73. The terminal device according to any one of claims 53 to 68, wherein a quantity of interlaces comprised in each sub-channel in the resource pool is the same.

74. The terminal device according to any one of claims 53 to 68, wherein a total quantity of interlaces in the resource pool is not an integer multiple of a quantity of the one or more interlaces comprised in the sub-channel, and an interlace comprised in a sub-channel in the resource pool is determined based on the quantity of interlaces comprised in the resource pool and the quantity of the one or more interlaces comprised in the sub-channel.

75. The terminal device according to claim 74, wherein a difference between quantities of interlaces comprised in any two sub-channels in the resource pool is less than or equal to 1.

76. The terminal device according to any one of claims 53 to 75, wherein resource pool configuration information of the resource pool comprises the first information.

77. The terminal device according to any one of claims 53 to 76, wherein
the obtaining unit is further configured to obtain second information, wherein the second information is used to indicate a quantity of interlaces comprised in a frequency domain resource of a PSCCH, and the quantity of the interlaces comprised in the frequency domain resource of the PSCCH is less than or equal to a quantity of the one or more interlaces comprised in the sub-channel.

78. The terminal device according to claim 77, wherein resource pool configuration information of the resource pool comprises the second information.

79. A network device, comprising:
a processing unit, configured to generate first information, wherein the first information is used to determine one or more interlaces that are in a resource pool and correspond to a sub-channel.

80. The network device according to claim 79, wherein the first information indicates the one or more interlaces corresponding to the sub-channel, by indicating a quantity of the one or more interlaces comprised in the sub-channel.

81. The network device according to claim 79 or 80, wherein indices of sub-channels in the resource pool have correspondences with indices of interlaces in the resource pool.

82. The network device according to any one of claims 79 to 81, wherein when the sub-channel comprises one interlace, indices of sub-channels in the resource pool have a one-to-one correspondence with indices of interlaces in the resource pool.

83. The network device according to any one of claims 79 to 81, wherein when the sub-channel comprises a plurality of interlaces, indices of the plurality of interlaces are consecutive.

84. The network device according to any one of claims 79 to 83, wherein interlace indices corresponding to the one or more interlaces are determined based on an index of an RB set to which the one or more interlaces belong.

85. The network device according to any one of claims 79 to 84, wherein the resource pool comprises a first RB set, and an interlace index corresponding to an interlace comprised in the first RB set is determined based on an index of the first RB set.

86. The network device according to claim 85, wherein an index of the first RB set in the resource pool is s, and an interlace index m corresponding to an interlace comprised in the first RB set is determined based on $m = m_1 + s \cdot M$, wherein $s \cdot M \le m < (s + 1) \cdot M$, M represents a quantity of interlaces comprised in one RB set, $m_1$ is an integer greater than or equal to 0, and $0 \le m_1 < M$.

87. The network device according to any one of claims 79 to 86, wherein the resource pool comprises a plurality of RB sets, and interlace indices corresponding to interlaces comprised in different RB sets in the plurality of RB sets are different.

88. The network device according to claim 87, wherein the plurality of RB sets comprise a second RB set and a third RB set, and if an index of the second RB set is consecutive to an index of the third RB set, a maximum interlace index among interlace indices corresponding to interlaces comprised in the second RB set is consecutive to a minimum interlace index among interlace indices corresponding to interlaces comprised in the third RB set.

89. The network device according to any one of claims 79 to 88, wherein a first-indexed interlace in the resource pool is mapped by using a first frequency domain position as a frequency domain start position, wherein

the first frequency domain position is a first-indexed CRB comprised in a carrier corresponding to the resource pool; or
the first frequency domain position is a first-indexed CRB comprised in a sidelink BWP corresponding to the resource pool.

90. The network device according to claim 89, wherein the resource pool comprises a fourth RB set, and a correspondence between an interlace corresponding to the fourth RB set and a CRB is determined based on at least one of following: a CRB index corresponding to a frequency domain start position of the sidelink BWP, a quantity of interlaces corresponding to an RB set in the resource pool, or an interlace index corresponding to the fourth RB set.

91. The network device according to any one of claims 79 to 88, wherein the interlaces are mapped by using a first-indexed CRB comprised in the resource pool as a frequency domain start position.

92. The network device according to claim 91, wherein the resource pool comprises a fifth RB set, and a correspondence between an interlace corresponding to the fifth RB set and a CRB is determined based on at least one of following: a CRB index corresponding to a frequency domain start position of the fifth RB set, a quantity of interlaces corresponding to an RB set in the resource pool, or an interlace index corresponding to the fifth RB set.

93. The network device according to any one of claims 79 to 92, wherein quantities of interlaces corresponding to different RB sets in a plurality of RB sets comprised in the resource pool are the same.

94. The network device according to any one of claims 79 to 93, wherein a quantity of interlaces comprised in an RB set in the resource pool is determined based on a size of a sidelink subcarrier spacing.

95. The network device according to any one of claims 79 to 94, wherein a quantity of interlaces comprised in each RB set in the resource pool is an integer multiple of a quantity of the one or more interlaces comprised in the sub-channel.

96. The network device according to any one of claims 79 to 94, wherein the resource pool comprises a sixth RB set, and if a quantity of interlaces comprised in the sixth RB set is not an integer multiple of a quantity of the one or more interlaces corresponding to the sub-channel, an interlace comprised in a sub-channel in the sixth RB set is determined based on the quantity of the interlaces comprised in the sixth RB set and the quantity of the one or more interlaces comprised in the sub-channel.

97. The network device according to claim 96, wherein a difference between quantities of interlaces comprised in any two sub-channels in the sixth RB set is less than or equal to 1.

98. The network device according to any one of claims 79 to 94, wherein a total quantity of interlaces in the resource pool is an integer multiple of a quantity of the one or more interlaces comprised in the sub-channel.

99. The network device according to any one of claims 79 to 94, wherein a quantity of interlaces comprised in each sub-channel in the resource pool is the same.

**100.**
The network device according to any one of claims 79 to 94, wherein a total quantity of interlaces in the resource pool is not an integer multiple of a quantity of the one or more interlaces comprised in the sub-channel, and an interlace comprised in a sub-channel in the resource pool is determined based on the quantity of interlaces comprised in the resource pool and the quantity of the one or more interlaces comprised in the sub-channel.

**101.**
The network device according to claim 100, wherein a difference between quantities of interlaces comprised in any two sub-channels in the resource pool is less than or equal to 1.

**102.**
The network device according to any one of claims 79 to 101, wherein resource pool configuration information of the resource pool comprises the first information.

**103.**
The network device according to any one of claims 79 to 102, wherein
a generating unit is further configured to generate second information, wherein the second information is used to indicate a quantity of interlaces comprised in a frequency domain resource of a PSCCH, and the quantity of the interlaces comprised in the frequency domain resource of the PSCCH is less than or equal to a quantity of the one or more interlaces comprised in the sub-channel.

**104.**
The network device according to claim 103, wherein resource pool configuration information of the resource pool comprises the second information.

**105.**
A terminal, comprising a memory and a processor, wherein the memory is configured to store a program, and the processor is configured to invoke the program in the memory, to cause the terminal to execute the method according to any one of claims 1 to 27.

**106.**
A network device, comprising a memory and a processor, wherein the memory is configured to store a program, and the processor is configured to invoke the program in the memory, to cause the network device to execute the method according to any one of claims 28 to 52.

**107.**
An apparatus, comprising a processor configured to invoke a program from a memory, to cause the apparatus to execute a method according to any one of claims 1 to 52.

**108.**
A chip, comprising a processor configured to invoke a program from a memory, to cause a device on which the chip is installed to execute a method according to any one of claims 1 to 52.

**109.**
A computer-readable storage medium, wherein the computer-readable storage medium stores a program, and the program causes a computer to execute a method according to any one of claims 1 to 52.

**110.**
A computer program product, comprising a program, wherein the program causes a computer to execute a method according to any one of claims 1 to 52.

**111.** A computer program, wherein the computer program causes a computer to execute a method according to any one of claims 1 to 52.

FIG. 1

FIG. 2

FIG. 3

| RB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|---|---|---|---|---|---|---|---|---|---|---|---|
| IRB index | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 |

FIG. 4

FIG. 5

FIG. 6-A

34

Represent an interlace allocated to a terminal device

RB set 0          Guard band          RB set 1

CRB index: 0 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55

IRB index: 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1 2 3 4 0 1

Uplink BWP

FIG. 6-B

Terminal device

Network device

S720: Generate the first information

Obtain first information

S710

Obtain the first information

FIG. 7

| Interlace index | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 |
|---|---|---|---|---|---|---|---|---|---|---|---|---|---|---|---|---|---|---|---|---|---|---|---|---|
| Index of a sub-channel | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 |

FIG. 8

| Interlace index | 0 | 1 | 2 | 3 | 0 | 1 | 2 | 3 | 0 | 1 | 2 | 3 | 0 | 1 | 2 | 3 | 0 | 1 | 2 | 3 |
|---|---|---|---|---|---|---|---|---|---|---|---|---|---|---|---|---|---|---|---|---|---|
| Sub-channel index | 0 | 0 | 1 | 1 | 0 | 0 | 1 | 1 | 0 | 0 | 1 | 1 | 0 | 0 | 1 | 1 | 0 | 0 | 1 | 1 |

FIG. 9

| Interlace index | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 |
|---|---|---|---|---|---|---|---|---|---|---|---|---|---|---|---|---|---|---|---|---|---|---|---|---|
| Sub-channel index | 0 | 0 | 1 | 1 | 2 | 0 | 0 | 1 | 1 | 2 | 0 | 0 | 1 | 1 | 2 | 0 | 0 | 1 | 1 | 2 | 0 | 0 | 1 | 1 |

FIG. 10

☐ Represent an interlace configured for a terminal device 2

☐ Represent an interlace configured for a terminal device 1

FIG. 11

FIG. 12

EP 4 489 495 A1

☐ Represent an interlace configured for a terminal device 2

☐ Represent an interlace configured for a terminal device 1

RB set 0          Guard band          RB set 1

CRB index | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 |

NR-U interlace index | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | 4 | 0 | 1 |

SL-U interlace index | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 | 3 | | | | | | 5 | 6 | 7 | 8 | 9 | 5 | 6 | 7 | 8 | 9 | 5 | 6 | 7 | 8 | 9 | 5 | 6 | 7 | 8 | 9 | 5 | 6 |

Resource pool

FIG. 13

EP 4 489 495 A1

□ Represent a sub-channel configured for a terminal device 1

⊟ Represent a sub-channel configured for a terminal device 2

FIG. 14

□ Represent a sub-channel configured for a terminal device 1

▣ Represent a sub-channel configured for a terminal device 2

FIG. 15

Terminal device 1600

Obtaining unit 1610

FIG. 16

Network device 1700

Processing unit 1710

FIG. 17

Apparatus 1800

Processor
1810

Memory
1820

Transceiver
1830

FIG. 18

## INTERNATIONAL SEARCH REPORT

| | International application No. |
| --- | --- |
| | **PCT/CN2022/088807** |

**A.   CLASSIFICATION OF SUBJECT MATTER**

H04W 72/04(2009.01)i

According to International Patent Classification (IPC) or to both national classification and IPC

**B.   FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: oppo, 欧珀, 梳齿, 梳, 子信道, 边链路, 直连链路, 侧行, 侧链路, 副链路, 资源池, 部分带宽, 资源块, sidelink , direct, SL, sub-channel, interlace, comb, IRB, indicate, BWP, resource pool, resource block, RB

**C.   DOCUMENTS CONSIDERED TO BE RELEVANT**

| Category* | Citation of document, with indication, where appropriate, of the relevant passages | Relevant to claim No. |
| --- | --- | --- |
| X | CN 111130733 A (HUAWEI TECHNOLOGIES CO., LTD.) 08 May 2020 (2020-05-08) description, paragraphs [0116]-[0358] | 1-111 |
| X | WO 2021203326 A1 (QUALCOMM INC. et al.) 14 October 2021 (2021-10-14) description, paragraphs [0096]-[0202], and figures 5-24 | 1-111 |
| A | WO 2021189394 A1 (LENOVO BEIJING LTD.) 30 September 2021 (2021-09-30) entire document | 1-111 |
| A | WO 2021013090 A1 (VIVO COMMUNICATION TECHNOLOGY CO., LTD.) 28 January 2021 (2021-01-28) entire document | 1-111 |
| A | ZTE et al. "NR sidelink physical layer structure" *3GPP TSG RAN WG1 #99 R1-1912514*, 09 November 2019 (2019-11-09), entire document | 1-111 |

☐ Further documents are listed in the continuation of Box C.          ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 November 2022** | **29 November 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

42

INTERNATIONAL SEARCH REPORT
Information on patent family members

International application No.

**PCT/CN2022/088807**

| Patent document cited in search report | | | Publication date (day/month/year) | Patent family member(s) | | | Publication date (day/month/year) |
|---|---|---|---|---|---|---|---|
| CN | 111130733 | A | 08 May 2020 | WO | 2020088564 | A1 | 07 May 2020 |
| | | | | CN | 111130733 | B | 14 January 2022 |
| WO | 2021203326 | A1 | 14 October 2021 | None | | | |
| WO | 2021189394 | A1 | 30 September 2021 | None | | | |
| WO | 2021013090 | A1 | 28 January 2021 | US | 2022141058 | A1 | 05 May 2022 |
| | | | | EP | 4007424 | A1 | 01 June 2022 |
| | | | | KR | 20220025006 | A | 03 March 2022 |
| | | | | JP | 2022541838 | A | 27 September 2022 |
| | | | | CN | 111818659 | A | 23 October 2020 |
| | | | | CN | 111818659 | B | 01 March 2022 |
| | | | | EP | 4007424 | A4 | 10 August 2022 |
| | | | | IN | 202227007427 | A | 24 June 2022 |

Form PCT/ISA/210 (patent family annex) (January 2015)